# EUROPEAN PATENT SPECIFICATION

(11) **EP 3 106 023 B1**
(45) Date of publication and mention of the grant of the patent: **31.01.2018**
(21) Application number: 16173135.1
(22) Date of filing: 06.06.2016
(51) Int. Cl.: A01F 15/08, A01F 15/07

(54) **WRAPPING APPARATUS AND WRAPPING METHOD WITH A TILTING UNIT FOR SELECTIVELY TILTING AN OBJECT INTO A FIRST ONE OR A SECOND ONE OF TWO OPPOSING DIRECTIONS**
EINWICKLUNGSVORRICHTUNG UND EINWICKLUNGSVERFAHREN MIT KIPPBARER EINHEIT ZUM SELEKTIVEN KIPPEN EINES GEGENSTANDS IN EINE ERSTE ODER EINE ZWEITE VON ZWEI ENTGEGENGESETZTEN RICHTUNGEN
APPAREIL D'EMBALLAGE ET PROCÉDÉ D'EMBALLAGE AVEC UNE UNITÉ D'INCLINAISON POUR INCLINER SÉLECTIVEMENT UN OBJET DANS UNE PREMIÈRE OU UNE DEUXIÈME DE DEUX DIRECTIONS OPPOSÉES

(30) Priority: 18.06.2015 NL 2014987
(43) Date of publication of application: 21.12.2016
(73) Proprietor: Forage Innovations B.V., 3147 PB Maassluis (NL)
(72) Inventor: BORCHERS, Jürgen, 3147 PB Maassluis (NL); SCHLICHTING, Malte Cornelius, 3147 PB Maassluis (NL)
(74) Representative: AGCO Intellectual Property Department

(56) References cited:
- EP-A1- 1 097 627
- EP-A1- 1 832 157
- EP-A2- 0 543 145
- GB-A- 2 478 419
- US-A1- 2010 024 357

## Description

### FIELD OF THE INVENTION

The invention refers to a wrapping apparatus and a wrapping method for wrapping an object into wrapping material, for tilting the wrapped object, and for depositing the wrapped and tilted object on the ground, in particular for wrapping, tilting, and depositing a round-cylindrical bale formed from loose agricultural crop material.

### BACKGROUND OF THE INVENTION

The invention can be used on board of an agricultural vehicle which is moved over ground and forms and deposits round-cylindrical objects, e.g. round bales.

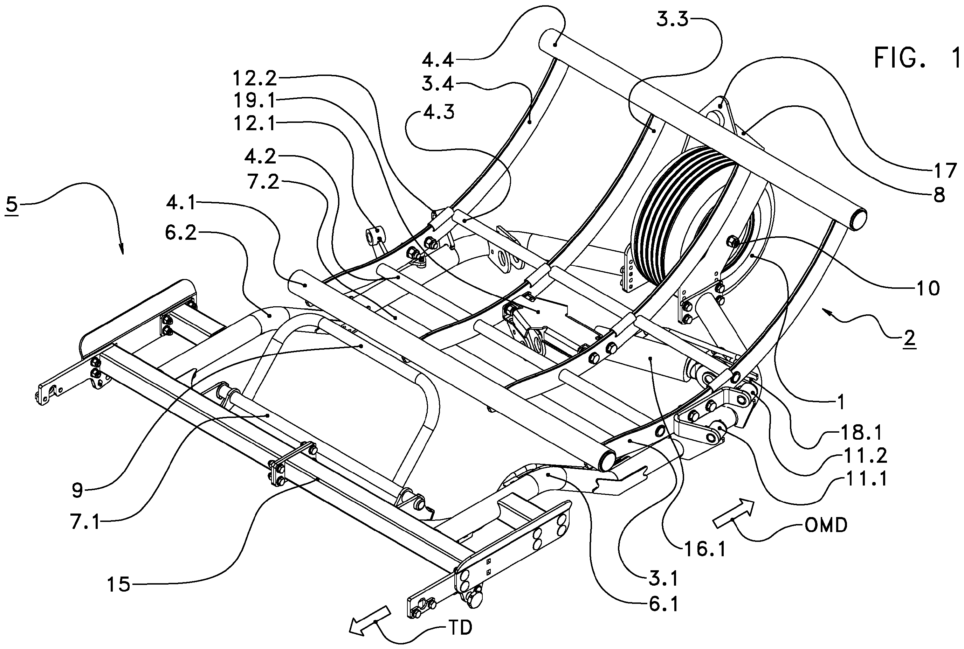

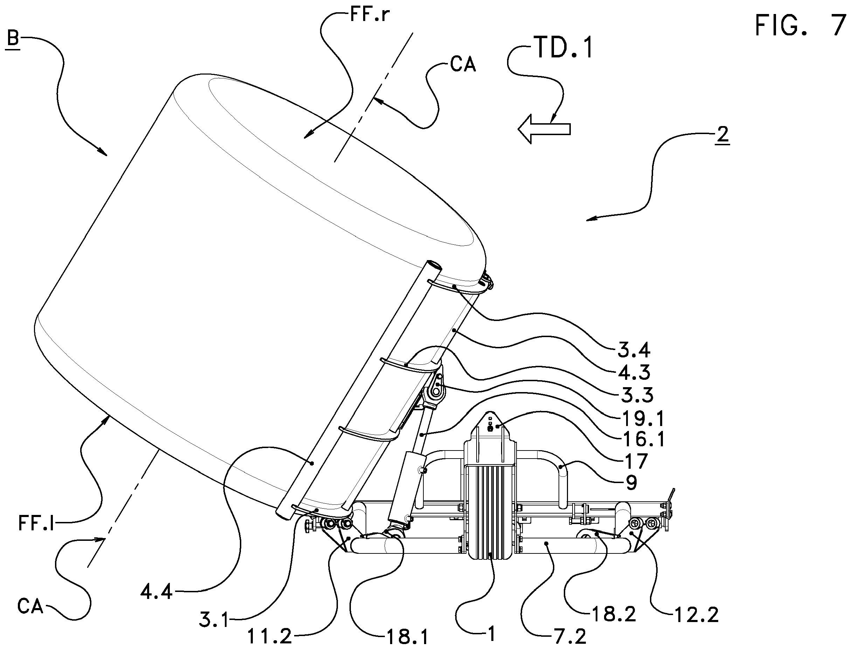

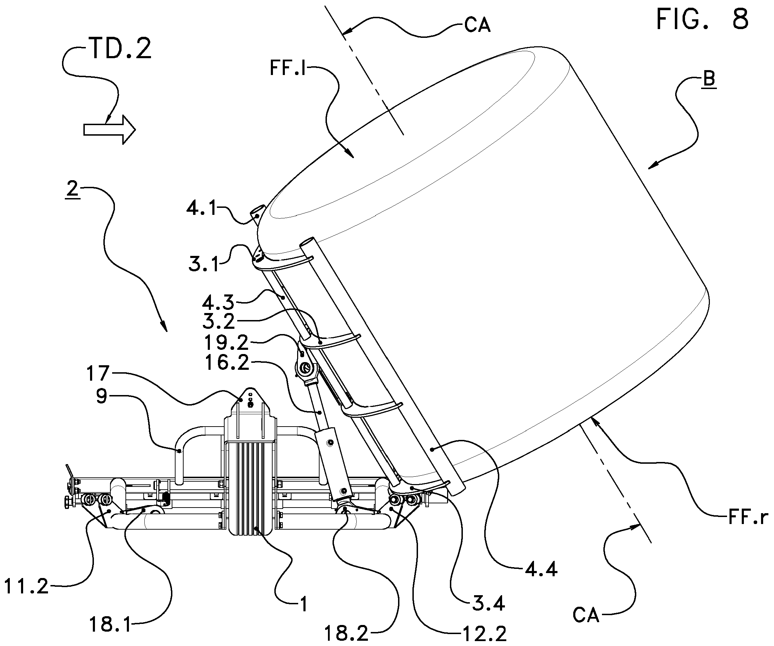

Fig. 1 of GB 2478419 B shows a bale wrapper 1 with a frame 2 and a turntable 4. The turntable 4 can rotate with respect to the wrapper frame 2 around a vertical axis. The rotatable turntable 4 carries a bale to be wrapped by means of two parallel rollers 6. A pivotal loading frame 5 can deliver a bale onto the turntable 4. A front dispenser 10 for plastic film is rigidly connected with the wrapper frame 2. A rear dispenser 15 comprises an L-shaped frame. A ram 17 can rotate the rear dispenser 15 about a vertical axis. The wrapped bale rolls over a plate from the turntable 4 onto the ground, cf. Fig. 7 and Fig. 8.

When a round-cylindrical object is deposited on its circumferential surface on the ground, the deposited object may roll downwards.

One option for avoiding this undesired event is described in EP 1832157 B1, also published as US 7353753 B2, which discloses a round baler 10 with a control unit (Steuereinrichtung 12) and an inclination sensor (Neigungssensor 26), cf. Fig. 1. This inclination sensor 26 detects the inclination around a horizontal axis perpendicular to the travelling direction and an inclination around a horizontal axis parallel to the travelling direction, cf. claim 1.

According to EP 1832157 B1 the bale 14 is wrapped in the pressing chamber and is afterwards transferred onto the ground, i.e. does not comprise a wrapper behind the baler. The wrapped bale 14 is transferred from the pressing chamber onto a trough (Träger 52) of a depositing device (Ablagevorrichtung 16).

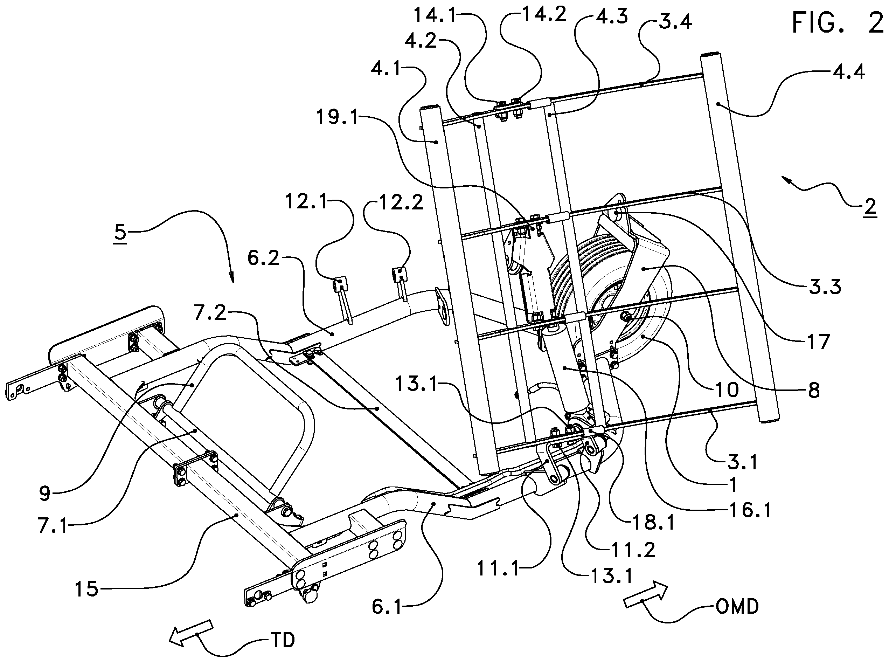

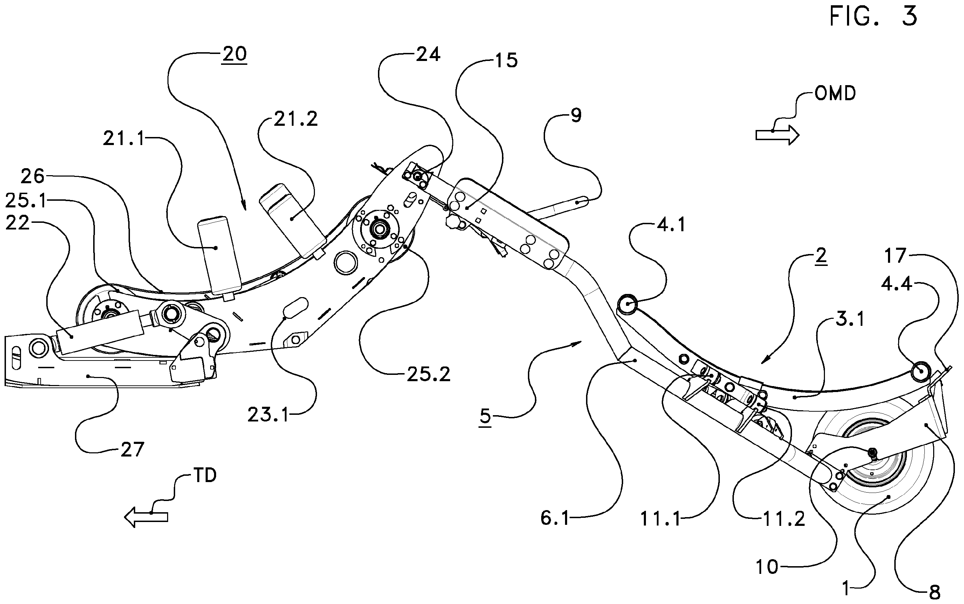

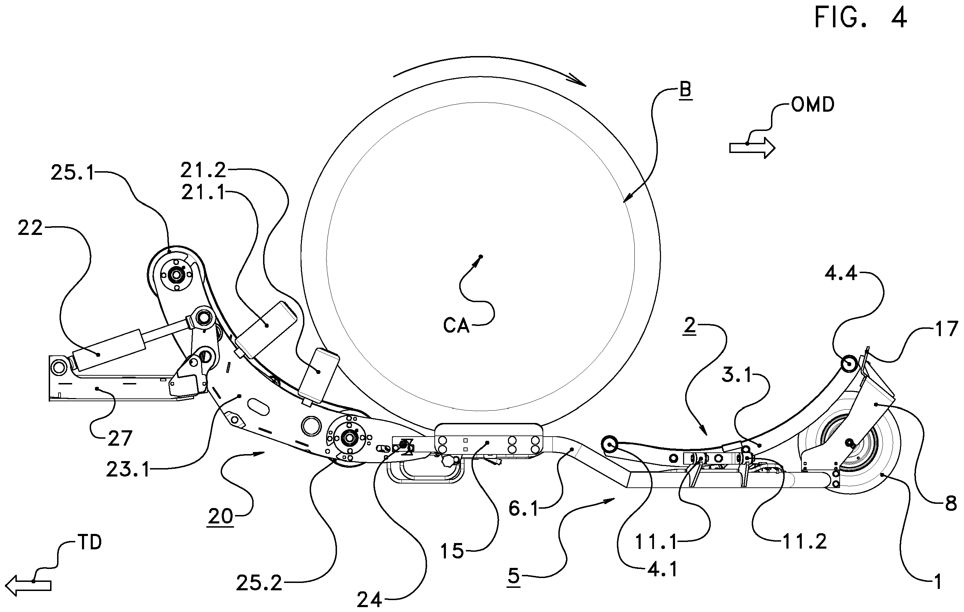

A vertical pivoting arm (Vertikalschwenkarm 48) can pivot with respect to the baler's frame around a horizontal axle 54, i.e. around an axle being parallel to the ground and perpendicular to the travelling direction. A horizontal pivoting arm (Horizontalschwenkarm 50) can pivot with respect to the vertical pivoting arm 48 around a vertical axle 56, cf. Fig. 2 and Fig. 3. The trough 52 is mounted on the horizontal pivoting arm 50, i.e. on an axle perpendicular to the ground and perpendicular to the travelling direction, and can pivot with respect to the horizontal pivoting arm 50 around a horizontal axle 58 being perpendicular to the travelling direction, cf. Fig. 2 and Fig. 3. An actuator (Betätigungsvorrichtung 40) can pivot the horizontal pivoting arm 50 around the vertical axis 56, cf. the top view of Fig. 4 to Fig. 6.

The wrapped bale 14 is transferred from the through 52 to the ground by pivoting the trough 52 around the horizontal axis 58 towards the ground. The wrapped bale 14 rolls around its circumferential surface from the trough 52 onto the ground and rests on a lower segment of its circumferential surface.

In one embodiment the horizontal pivoting arm 50 can be rotated around its own longitudinal axis, i.e. around an axis parallel to the traveling direction. The bale can thereby be deposited onto its end face 44.

According to EP 1832157 B1 it is inhibited that the deposited bale can roll downwards. For achieving this goal one of the following measures is performed:
- A signal for the operator is generated which indicates that the bale 14 should currently not be deposited on the ground.
- The step of pivoting the trough 52 is inhibited as long as the bale 14 would roll away. It is possible to pivot the horizontal pivoting arm 50 with the trough 52 such that the horizontal arm 50 is angular or even perpendicular to the travelling direction of the baler.

An alternative solution to avoid this undesired event it is desired to tilt the wrapped object and to deposit the round-cylindrical object onto one of its front faces on the ground. The center axis of the tilted and deposited object is perpendicular to the ground. The problem that the object rolls downwards can also occur in the case of a cuboid object and can also be avoided by tilting this object.

Tilting the object is performed by a tilting unit which is in general mounted behind the vehicle. In particular in the domain of agricultural harvesters several proposals for such a tilting unit were made. Such a tilting unit is sometimes also called "quarter turn" as the object is tilted around 90 degrees if the vehicle is on a horizontal ground. The round-cylindrical object is in this case a bale made from loose crop material. The entire surface or one surface part, e.g. the circumferential surface, of the bale to be deposited is wrapped into a net or a plastic sheet, e.g.

EP 0543145 A2, also published as CA 2081839 A1, discloses a wrapper for round bales (Rundballenwickelgerät 1), cf. Fig. 1. The bale 20 to be wrapped rests on a wrapping table (Wickeltisch 31) with two rollers (Rollen 41) of the wrapper 1. For removing the wrapped bale 20 from the wrapping table 31, the wrapping table 31 is pivoted around a pivoting axis perpendicular to the travelling direction.

A bale tipper (Abladekippvorrichtung 47) is mounted behind the wrapping table 31 of EP 0543145 A2, cf. Fig. 2, Fig. 7 and Fig. 8. The bale tipper 47 can be moved around a horizontal axis 48 perpendicular to the travelling direction. After being removed from the wrapping table 31, the wrapped bale 20 drops onto a pivotal guiding element (Leitstück 53) of the bale tipper 47, cf. Fig. 2 and Fig. 7. This guiding element 53 is positioned behind the wrapping table 31. The guiding element 53 has the shape of a rod and can be pivoted around a vertical axis at the rear end of the tilting unit 47 by means of a hydraulic actuator (Hydrobeweger 52). Thanks to this guiding element 53 the wrapped bale 20 is tilted onto a front face 55, cf. Fig. 8. A round bale 20 can selectively be tilted to the right or to the left onto the corresponding front face 55, cf. col. 11/l. 15ff. For enabling this selective tilting movement the hydraulic actuator 52 can pivot the guiding element 53 into the corresponding position around the rear vertical axis, cf. Fig. 3, such that an angle between the travelling direction and the longitudinal axis of the guiding element 53 occurs.

In a further embodiment of EP 0543145 A2 the entire tilting unit (Abladekippvorrichtung 70) can be pivoted such that the bale 20 can be tilted to the left or to the right, cf. Fig. 9 and col. 11/l.20ff. After the wrapped bale 20 is deposited onto the guiding element 53, the guiding element 53 is pivoted upwards and supports the tilting movement of the bale onto one front face 55.

NL 2010169 C discloses a wrapper 1 with a wrapping table 5 and a wrapping device 6 comprising two arms which hold two wrapping material reels 7, cf. Fig. 1. A hydraulic actuator 20 can pivot the wrapping table 5 carrying a bale 40 around a horizontal axis perpendicular to the travelling direction A. The bale 40 rolls from the tilted wrapping table 5 opposite to the travelling direction onto a bale tipper 200 with one guiding element 210 and a tipping member 211. The circumferential surface of the bale 40 rolls on the guiding element 20 and hits the tipping member 211 and is stopped, cf. Fig. 3. The bale 40 is tilted on a front face 41, cf. Fig. 1.

According to NL 2010169 C a weighing device 304 measures the weight of the bale. A tachometer (velocity meter 306) can measure the velocity of the wrapper 1. An inclination sensor 308 determines the inclination of the wrapper 1. The length of the stroke of the hydraulic actuator 20 and thereby the tilting angle of the wrapping table 5 is controlled depending on a parameter of the round bale 40 and/or depending on the measured travelling velocity of the wrapper 1.

EP 1097627 B1 describes a bale wrapper 10 with a wrapping table 11. A round-cylindrical bale 14 is rotated around its center axis by several parallel rollers 12 and belts 13, cf. Fig. 2. The wrapped bale 14 is moved from the wrapping table 11 onto a receiving cradle 15. The cradle 15 comprises a platform 19 and a support frame 20, cf. Fig. 2. The cradle 15 can be tilted around a horizontal axis parallel to the travelling direction, cf. Fig. 3. The wrapped bale 14 is deposited on a front face, cf. Fig. 3.

In an alternative embodiment of EP 1097627 B1 the cradle 15 comprises a roller unit 25 with several parallel rollers 26 and an endless belt 29. The support means is tilted and the belt 29 moves the bale in a lateral direction away from the cradle 15.

GB 2305648 A discloses a bale wrapper 1. A bale support table 20 with several belts 37 rotates the bale around its own center axis. In addition the entire wrapping table 20 together with the bale 2 is rotated around a pivoting axis 41 such that the rotated bale 2 pulls a web of wrapping material from a stationary holder 16, cf. Fig. 1 and Fig. 2.

The wrapped bale 2 is transferred from the bale support table 20 onto a bale transfer mechanism 50. This bale transfer mechanism 50 tilts the wrapped bale 2 and deposits the wrapped bale 2 onto the ground such that the deposited wrapped bale 2 rests on one front face 51, cf. Fig. 7. For tilting the wrapped bale 2 a hydraulic ram 30 can tilt the wrapping table 20 with the wrapped bale 2, cf. Fig. 3. The bale 2 is transferred onto a holding sheet 76 mounted on a frame 75 of the bale transfer mechanism 50.

According to GB 2305648 A a further hydraulic ram 70 lowers down the frame work 75 carrying the holding sheet 76. For tilting the bale transfer mechanism 50 with the bale support platform 52 an upstanding tilt member 85 with a roller 86 engages from below the bale support platform 52 while the bale support platform 52 with the holding sheet 76 is lowered downwards by the hydraulic ram 70. The downward movement of the bale support platform 52 together with the tilt member 85 makes the entire bale transfer mechanism 50 being tilted, cf. Fig. 4. This tilts the wrapped bale 2 onto the front face 51.

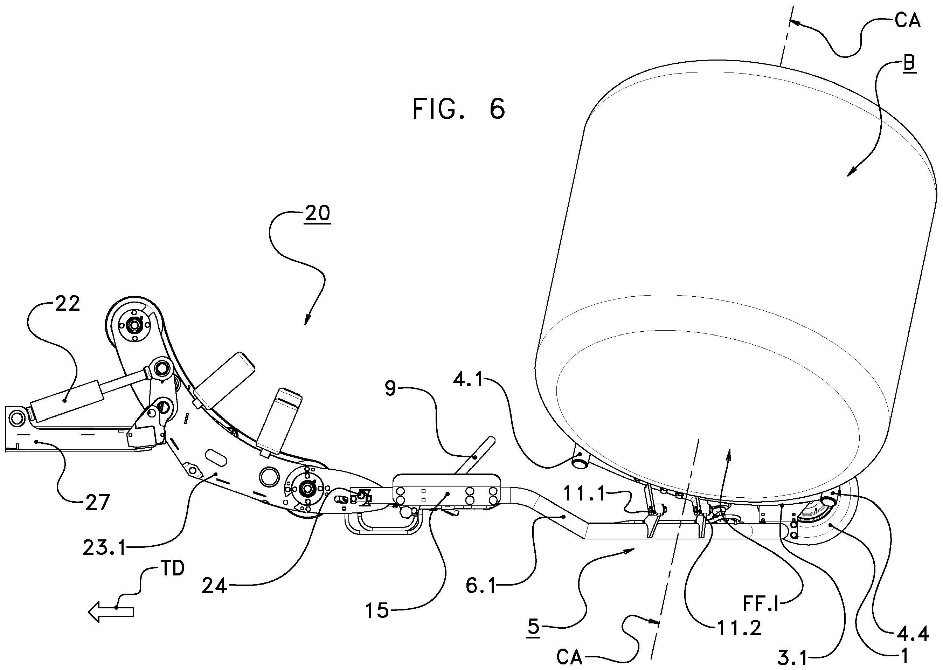

The upstanding tilt member 85 is mounted at the right side of a carrying frame work, cf. Fig. 6, such that the bale support platform is always tilted to the same right side, cf. Fig. 6.

### SUMMARY OF THE INVENTION

A problem solved by the invention is to provide a wrapping apparatus with the features of the preamble of claim 1 and a wrapping method with the features of the preamble of claim 18 which enable a safe depositing of the wrapped object onto a front face by tilting the object selectively into the first or in the second direction without the need of manually changing the tilting unit during operation.

This problem is solved by a wrapping apparatus with the features of claim 1 and by a wrapping method with the features of claim 18. Preferred embodiments are specified in the depending claims.

The wrapping apparatus according to the invention is arranged to wrap at least one object with two front faces and to deposit it on the ground. The object extends along and around a center axis which reaches from one front face to the other front face. The wrapping apparatus comprises
- a wrapper and
- a tilting unit.

The tilting unit comprises
- a tilting unit frame,
- a trough carried by the tilting unit frame, and
- a tilting actuator assembly.

The wrapping apparatus is arranged to operate as follows and the wrapping method comprises the following steps:
- The wrapper wraps at least one object into wrapping material.
- The wrapped object is moved from the wrapper in an object moving direction onto the trough of the tilting unit. The moved object rests on the trough. After been moved, the center axis of the object resting on the trough is perpendicular to the object moving direction.
- The tilting actuator assembly selectively pivots the trough carrying the object with respect to the tilting unit frame selectively in a first or in a second direction. Both directions are perpendicular or angular to the object moving direction. The first direction is opposite to the second direction.
- The wrapped object on the pivoted trough is thereby tilted in the first or in the second direction, resp.
- The tilted object is deposited on the ground onto one front face. The center axis of the deposited object is perpendicular or angular to the ground. Depending on the direction into which the trough is pivoted the object is deposited on the one front face or on the other front face.

### ADVANTAGES

According to the invention the wrapped object is tilted and is deposited on the ground such that the deposited object rests on a front face and not on its circumferential surface. This feature significantly reduces the risk that the object rolls downwards in a direction perpendicular to its center axis when being deposited on a hilly and therefore descending ground. This risk can in particular occur when the object is a round-cylindrical object and would be deposited on the cylindrical surface. Thanks to the invention it is not necessary to deposit the wrapped object such that the object's center axis is parallel to the hill gradient.

In addition the risk is reduced that wrapping material on the circumferential surface of the object is damaged when depositing the wrapped object on the ground, in particular wrapping material covering an edge between the lower front face and the circumferential surface of the deposited object.

According to the invention the wrapped object is selectively tilted with respect to the object moving direction into a first one or a second one of two opposing directions. This feature makes it possible to tilt the object in an upward direction, i.e. against the force of gravity, when the wrapping device is operated in a hilly environment and is thereby itself tilted, in particular if the wrapping device is tilted around an axis substantially parallel to the object moving direction. This feature further reduces the risk that the deposited object rolls downwards.

The invention provides two different possible depositing locations for the tilted object. The tilted object can selectively be deposited on a first location (tilting the trough with respect to the object to the first direction) or a second location (tilting it to the second direction). It is not necessary to change the position or orientation of the wrapping apparatus.

According to the invention the wrapped object is moved onto the trough. The object rests on the trough with a segment of the circumferential surface touching the trough. The trough with the object is tilted, i.e. pivoted with respect to the tilting unit frame. This feature better keeps and guides the object when the object is tilted and deposited. Compared with a rod serving as the tilting unit the risk is significantly reduced that the object on the tilting unit rolls or glides away in an undesired direction or that the wrap on the object's surface is damaged.

According to the invention the tilting actuator assembly pivots the trough with respect to the tilting unit frame selectively into a first direction or into an opposite second direction. Thanks to this feature it is possible but not necessary that a human operator manually changes the orientation or operating mode of the tilting unit for enabling the tilting unit to deposit the object in the desired direction.

### PREFERED EMBODIMENTS

Preferably the wrapping apparatus can be moved over ground in a travelling direction. This travelling direction is opposite to or parallel to the object moving direction. The center axis of the object resting on the trough is perpendicular to the travelling direction.

According to the invention the trough is pivoted with respect to the tilting unit frame around a trough pivoting axis. This trough pivoting axis is preferably parallel to the object moving direction. In the case of a vehicle the trough pivoting axis is preferably parallel to the travelling direction.

In one embodiment the object comprises a circumferential surface positioned around the object's center axis, e.g. the cylindrical shell of a round-cylindrical object. The circumferential surface reaches from front face to front face. Preferably the object rolls over its circumferential surface in the object moving direction when being moved onto the trough. The center axis is perpendicular to the object moving direction. Preferably the object rests on a segment of the circumferential surface on the trough.

Preferably the trough comprises a curved sheet wherein the diameter of the sheet curve is adapted to the maximal dimension of the object perpendicular to the center axis, e.g. the object's diameter.

In a further embodiment the trough comprises two rigidly connected sheets forming the trough. The trough according to this embodiment has a V-shaped cross section. Every sheet descends to the edge in which the two sheets are connected with each other. Preferably the edge extends perpendicular to the object moving direction. Preferably the maximal distance between the sheets is larger than the maximal dimension of the object perpendicular to its center axis, e.g. larger than the object's diameter.

According to one embodiment the tilting actuator assembly comprises two tilting actuators, e.g. hydraulic piston-cylinder devices, namely a first one and a second one. The first actuator can operate independently from the second actuator. The first tilting actuator can pivot the trough carrying the object with respect to the tilting unit frame in the first one of the two opposing directions. The second tilting actuator is not used when the trough is to be pivoted to the first direction but is in a parking mode. The second tilting actuator can pivot the trough with the object with respect to the tilting unit frame in the second one of the two opposing directions. The first tilting actuator is now in a parking mode.

Thanks to this embodiment every tilting actuator of the tilting actuator assembly can be connected with the trough in an upper connection point and with the tilting unit frame in a lower connection point - preferably by means of two pivotal connections. A suitable and sufficient lever arm can be achieved. The pivotal connections can be positioned depending on the available space and - in the case of piston-cylinder units as the tilting actuators - of the possible strokes. The embodiment provides a very stable mechanical construction also in the case of a heavy wrapped object to be tilted. Preferably every tilting actuator can extend and retract. Extending the tilting actuator causes the trough to be tilted upwards against the force of gravity.

In a further embodiment one tilting actuator is saved. In contrast to the embodiment with two tilting actuators the same tilting actuator selectively pivots the trough with the object to the first direction (the tilting actuator is in a first position) or to the second direction (the tilting actuator is in a second position). A moveable base part of the actuator rests on the tilting unit frame.

According to this further embodiment an actuator shifting device shifts a base part of the tilting actuator selectively into a first position or into a second position. In the first position the base part has a lateral offset in a first offset direction with respect to a middle axis of the trough. The trough extends along this middle axis which is parallel to the object moving direction. In the second position the base part has a lateral offset in a second offset direction which is opposite to the first offset direction. Preferably an actuator guiding device guides the base part while the base part is shifted.

It is also possible that the tilting actuator is connected with the trough by means of a moveable trough connector. A shifting device shifts the trough connector selectively into a first or into a second position.

According to the invention the tilting actuator assembly pivots the trough with the object selectively into a first one or a second one of the opposing directions. In one embodiment a control unit automatically generates control inputs for the tilting unit actuator and causes the tilting actuator assembly to pivot the trough in one direction. In one implementation the control unit generates the control inputs depending on user inputs made by a human operator which monitors and steers the wrapping apparatus.

In a further implementation the control unit automatically generates the control inputs depending on signals from an inclination sensor and/or a further sensor for a ground property. This inclination sensor measures a value indicative of the inclination of the wrapping apparatus around a tilting axis parallel to the object moving direction. The inclination sensor can comprise a pendulum or can combine an inclination map with the measured current geo-position of the wrapping apparatus. The further sensor can detect a rigid object on the ground, e.g.

The embodiment with the inclination sensor releases the human operator from the task of watching the inclination and reduces the risk that the object is improperly deposed on the ground due to a wrong or missing operator decision. Preferably the tilting actuator assembly pivots the trough into a first direction if the ground on which the wrapping apparatus is operated ascends to this first direction. The tilting actuator assembly pivots the trough into the opposite second direction if the ground on which the wrapping apparatus is operated ascends to this second direction.

It is possible that both implementations are combined: The control unit automatically generates the control inputs depending on signals from the inclination sensor. The human operator can override the automatic operation of the control unit by entering corresponding user inputs for pivoting the trough.

In one embodiment the tilting actuator assembly only pivots the trough when the measured inclination is within a given range, e.g. is smaller than a given threshold. Otherwise the through is not tilted. This embodiment reduces the risk that the deposited object moves downhill although the object is deposited on a front face. Preferably an alert is given to the operator in the case of a high inclination, e.g. an inclination outside of the given range. The operator is thereby informed that and why the trough is not tilted.

Preferably the wrapper wraps the object into at least one web made of an impermeable material, e.g. of at least e.g. into at least one plastic film.

In one embodiment the wrapping apparatus is a stand-alone wrapping apparatus and comprises an object lifting device, e.g. a fork lifter which supports from below and carries the object or a gripper with two yaws which clamp the object on the ground between them. The object lifting device lifts the object to be wrapped onto a part of the wrapper, e.g. onto a wrapping table.

In a further embodiment the wrapping apparatus is mechanically connected with an object forming apparatus, e.g. with a round or cuboid baler. The object forming apparatus forms the object to be wrapped and deposited. The formed and wrapped object is transferred onto the trough.

In one embodiment the object forming apparatus forms the object in an object forming chamber. The wrapper wraps a surface of the formed object into wrapping material while the object is still in the object forming chamber. In the case of a round-cylindrical object the circumferential surface of the object in the object forming chamber is wrapped. The wrapped object is ejected out of the object forming chamber and is transferred onto the trough.

In one embodiment the wrapper is mechanically connected with the object forming apparatus and is positioned outside of the object forming chamber and preferably behind the object forming apparatus - seen in the object moving direction. The object is transferred from the object forming chamber onto the wrapper, e.g. onto a wrapping table, and is wrapped by the wrapper. The wrapped object is transferred in the object moving direction onto the trough of the tilting unit.

The invention can also be implemented on board of a stationary plant, e.g. a plant for pressing recycling or waist material to bales and for wrapping these bales.

These and other aspects of the invention and of the preferred embodiment will be even more apparent from the detailed embodiment as described below and will be elucidated in detail there.

### BRIEF DESCRIPTION OF THE DRAWINGS

Fig. 1 shows in a perspective view the tilting unit with the trough and the tilting unit frame wherein the trough is in a bale receiving position;
Fig. 2 shows in a perspective view the tilting unit of Fig. 1 with the trough in a left bale tilting position;
Fig. 3 shows in a side view the tilting unit of Fig. 1 mounted behind a wrapping unit;
Fig. 4 shows in a side view a wrapped bale rolling from the tilting wrapping table onto the trough still being in the bale receiving position;
Fig. 5 shows the tilting unit of Fig. 4 wherein the wrapped bale has reached the trough being in the bale supporting position;
Fig. 6 shows the tilting unit of Fig. 5 wherein the trough is tilted in a left tilting position and tilts the bale to the left;
Fig. 7 shows the tilting unit of Fig. 6 in a rear view with the trough in the left bale tilting position;
Fig. 8 shows the tilting unit of Fig. 7 with the trough in a right bale tilting position tilting the wrapped bale to the right.

### DETAILED DESCRIPTION OF EMBODIMENT

In the embodiment the invention is used on board of an agricultural vehicle. The object to be wrapped, tilted, and deposited on the ground is a round-cylindrical bale B which is formed under pressure from loose crop material (hay, straw, or silage, e.g.). The bale B comprises two parallel round front faces and a circumferential surface extending between these parallel front faces FF.l and FF.r, cf. Fig. 6 to Fig. 8. The center axis CA of the bale B is perpendicular to both front faces FF.l and FF.r.

The tilting unit according to the embodiment can be used on at least three kinds of agricultural vehicles which can be moved over an agricultural field in a travelling direction:
- behind a stand-alone round baler (solo round baler),
- behind a stand-alone wrapper, or
- behind a baler-wrapper combination.

The terms "behind", "left", and "right" refer to the travelling direction in which the vehicle is moved over ground.

A round baler picks up loose crop material from the ground, conveys the picked-up loose crop material towards and into a drum-shaped bale forming chamber, forms under pressure in the bale forming chamber a round-cylindrical bale, wraps the circumferential surface of the bale in the bale forming chamber into wrapping material (a net, several strands of twine, or a plastic sheet), and ejects the wrapped bale out of the bale forming chamber.

A stand-alone baler wraps the bale in the bale forming chamber and deposits the ejected wrapped bale on the ground. The wrapper therefore belongs to the stand-alone baler. A web of wrapping material is injected into the bale forming chamber.

A wrapper can operate as a stand-alone wrapper or can belong to a baler-wrapper combination and carries the bale to be wrapped on a wrapping table. The wrapper
- moves at least one supply reel with wrapping material (typically a plastic sheet) with respect to the bale on the wrapping table, e.g. by rotating the holder around the bale rotated by the wrapping table, and
- removes the wrapped bale from the wrapping table, typically by tilting the wrapping table around an axis perpendicular to the traveling direction.

A stand-alone wrapper lifts the bale from the ground by a suitable gripping device and moves the lifted bale on the wrapping table.

A baler-wrapper combination comprises a baler and a wrapper positioned outside of the bale forming chamber. The baler wraps the circumferential surface of the bale in the bale forming chamber into a first kind of wrapping material (a net or several strands of twine, e.g.). The baler-wrapper combination transfers the wrapped bale from the bale forming chamber onto the wrapping table of the wrapper. The wrapper wraps the bale on the wrapping table into a second kind of wrapping material (plastic sheet, e.g.), removes the bale wrapped into two kinds of wrapping material from the wrapping table, and deposits the wrapped bale on the ground.

A round-cylindrical bale can have a weight of several hundred or even thousand kilogram. A bale resting on the ground on its circumferential surface may roll downwards if the ground descends. In addition the wrapping material may be damaged if the deposited bale is positioned on its circumferential surface. Therefore a tilting unit tilts the wrapped bale such that the wrapped bale is positioned on one of its circumferential surfaces on the ground.

Fig. 1 and Fig. 2 show in a perspective view the tilting unit of the embodiment in two positions without a bale. Fig. 3 shows the tilting unit of Fig. 1 and Fig. 2 mounted behind a wrapper, in this case a wrapper of a baler-wrapper combination. The vehicle with the tilting unit is moved in a travelling direction TD over ground. In all applications the wrapped bale is moved in an object moving direction OMD from the wrapper onto the tilting unit. This object moving direction OMD is opposite to the travelling direction TD.

The tilting unit comprises
- a tilting unit frame 5,
- a connecting bracket 15 for connecting the tilting unit frame 5 with a wrapper or with a baler,
- a trough 2 which is pivotally mounted on the tilting unit frame 5,
- a ground-engaging wheel 1 with a horizontal axle 10,
- a holder 8 for the axle 10 of the wheel 1, and
- a stop element 17 for the trough 2 which is mounted at the holder 8.

The tilting unit frame 5 comprises
- two longitudinal frame beams 6.1, 6.2 (a left beam 6.1 and a right beam 6.2) extending in the travelling direction TD,
- a straight traversal beam 7.2 connecting the two longitudinal beams 6.1, 6.2,
- a bale retainer with a spring-mounted bracket 9 and a bearing 7.1 for the bracket 9,
- two left supporting elements 11.1, 11.2 for the trough 2, and
- two right supporting elements 12.1, 12.2 for the trough 2.

The connecting bracket 15 is rigidly connected with both longitudinal beams 6.1, 6.2.

The trough 2 comprises
- four straight traversal beams 4.1, ..., 4.4,
- four curved longitudinal beams 3.1, ..., 3.4,
- two left damping elements 13.1, 13.2 mounted at the left longitudinal bearing 3.1, and
- two right damping elements 14.1, 14.2 mounted at the right longitudinal bearing 3.4.

The trough can selectively be pivoted to the left or to the right wherein the terms "left" and "right" refer to the travelling direction TD. The left tilting direction TD.1 serves as the first direction and the right tilting direction TD.2 as the second direction, cf. Fig. 7 and Fig. 8.

The tilting unit further comprises a hydraulic tilting actuator assembly 16.1, 16.2 with at least one tilting actuator in the form of a hydraulic piston-cylinder unit. This tilting actuator 16.1, 16.2 is pivotally connected with the tilting unit frame 5 as well as with the trough 2. Expanding the piston-cylinder unit causes the trough 2 to be tilted upwards against the force of gravity.

In one implementation the tilting unit comprises a left hydraulic actuator 16.1 which is adapted for tilting a bale B to the left and a right hydraulic actuator 16.2 which is adapted for tilting the trough 2 carrying the bale B to the right. For sake of clarity only one hydraulic actuator 16.1 or 16.2 is shown in Fig. 1 to Fig. 8 whereas the other actuator is omitted. Fig. 1, Fig. 2 and Fig. 7 show a left tilting actuator 16.1 and Fig. 8 show a right tilting actuator 16.2. Every tilting actuator comprises a hydraulic piston-cylinder unit. Expanding the piston-cylinder unit causes the trough 2 to be pivoted upwards against the force of gravity.

A control unit (not shown) can generate control inputs which trigger the or one piston-cylinder unit 16.1, 16.2 to expand or to retract. In one implementation the control unit selectively opens
- a left valve for the left hydraulic actuator 16.1 or
- a right valve for the right hydraulic actuator 16.2.

The left hydraulic actuator 16.1 is pivotally connected with the tilting unit frame 5 by means of a left frame-side connecting element 18.1 mounted at the left frame beam 6.1 of the tilting unit frame 5. The left actuator 16.1 is connected with the trough 2 by means of a trough-side connecting element 19.1. This left trough-side connecting element 19.1 is mounted at the curved longitudinal beam 3.3 of the trough 7.

Accordingly the right actuator 16.2 is connected with the trough 2 by means of a right trough-side connecting element 19.2 which is mounted at the curved longitudinal beam 3.2, cf. Fig. 8. The right actuator 19.2 is connected with the tilting unit frame 5 by means of a right frame-side connecting element 18.2 mounted at the right frame beam 6.2.

Fig. 1 shows the trough 2 in a bale receiving position in which the curved longitudinal beams 3.1, ..., 3.4 are parallel to the travelling direction TD and the traversal beams 4.1, ..., 4.4 are perpendicular to the travelling direction TD. Fig. 2 shows the trough 2 in a left bale tilting position.

Fig. 3 shows how the tilting unit is mounted behind a wrapping table 20 of a wrapper. The wrapper comprises a wrapper frame 27 and further parts (not shown). The wrapping table 20 comprises
- a wrapping table frame with two longitudinal curved table frame parts 23.1 and 23.2 extending in the travelling direction TD,
- two driven rollers 25.1, 25.2 which are rotatably mounted between the two table frame parts 23.1, 23.2,
- several conveyer belts 26 guided around the driven rollers 25.1, 25.2,
- two left lateral guiding elements 21.1 and 21.2 (bobbins) mounted on the left beam 23.1,
- two corresponding right lateral guiding elements (not shown), and
- a left hydraulic wrapping table actuator 22 and a corresponding right hydraulic wrapping table actuator (not shown).

The table actuator 22 can tilt the wrapping table 20 with respect to the wrapper frame 27 around a horizontal axis perpendicular to the drawing planes of Fig. 3 to Fig. 6.

The connecting bracket 15 of the tilting unit is hingedly connected with the wrapping table 20 by means of a traversal axle 24 which is connected with the wrapping table frame parts 23.1, 23.2 and which extends perpendicular to the drawing plane of Fig. 3. The bracket 15 is connected with this axle 24 in two points. The tilting unit can rotate with respect to the wrapping table 20 around this axle 24. Therefore the wrapping apparatus can better adapted to the ground contour.

In the embodiment two holders (not shown) for two supply reels with plastic sheet are guided around a bale B resting on the wrapping table 20 and being rotated by the belts 26. The holders are mounted on a wrapping ring or on the free ends of two rotated wrapping arms.

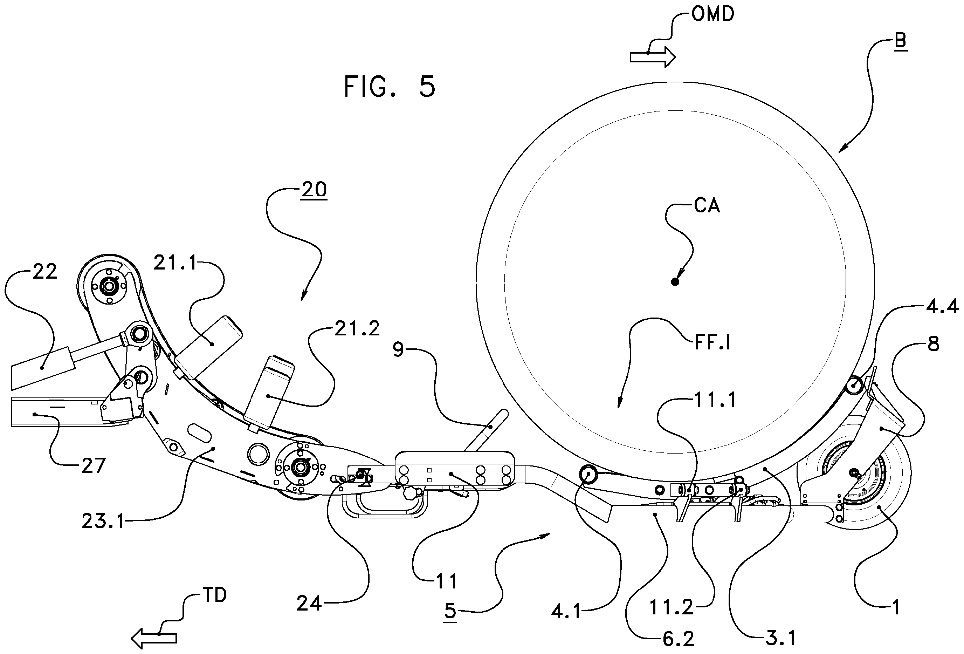

Fig. 4 and Fig. 5 demonstrate in a side view how a bale B is transferred from the wrapping table 20 into the object moving direction OMD onto the trough 2 of the tilting unit. The actuator 22 has pivoted the wrapping table 20 in the object moving direction OMD upwards and towards the tilting unit. The bale B rolls backwards (in the object moving direction OMD and opposite to the travelling direction TD) from the wrapping table 20 towards the trough 2. The trough 2 is in a bale receiving position. The traversal beams 4.1, 4.2, ... are positioned perpendicular to the travelling direction TD and perpendicular to the drawing plane of Fig. 4 and Fig 5. Fig. 1 also shows the trough 2 in the bale receiving position.

Fig. 4 shows the bale B in an intermediate position between the wrapping table 20 and the trough 2. The bale B has left the wrapping table 20 and has not yet reached the trough 2. Fig. 5 shows the wrapping table 20 and the tilting unit of Fig. 4 in a situation in which the bale B has reached the trough 2 being in the bale receiving position. The erected spring-mounted bracket 9 prevents the bale B from rolling back towards the wrapping table 20, i.e. prevents the bale B from rolling opposite to the object moving direction OMD and in the travelling direction TD. When being moved from the wrapping table 20 onto the trough 2 and when resting on the trough 2, the center axis CA of the bale B is perpendicular to the object moving direction OMD and to the drawing planes of Fig. 3 to Fig. 5.

Fig. 6 demonstrates in a side view how the tilting unit pivots the trough 2 carrying the bale B to the left (first tilting direction TD.1) with respect to the tilting unit frame 5. The bale B is pivoted towards the observer and is later deposited such that the deposited bale B lies on the left front face FF.I.

Fig. 7 and Fig. 8 show the tilting unit of the embodiment in a rear view. The travelling direction TD and the object moving direction OMD are perpendicular to the drawing planes of Fig. 7 and Fig. 8. The travelling direction TD points away from the observer. Fig. 7 shows the left hydraulic actuator 16.1 in an expanded state. In Fig. 7 the right actuator 16.2 is omitted. The trough 2 with the bale B is pivoted to the left (first tilting direction TD.1). Fig. 8 shows the right hydraulic actuator 16.2 in an expanded state. In Fig. 8 the left actuator 16.1 is omitted. The trough 2 with the bale B is pivoted to the right (second tilting direction TD.2).

For avoiding that the tilted and deposited bale B rolls down a hill, the bale B is preferably tilted in an upward direction against the force of gravity - provided that the vehicle with the wrapping unit is operated in a hilly environment. Therefore the decision when to deposit the bale B and whether to tilt the bale B to the left or to the right preferably depends on the current amount and direction of inclination and ascension of the ground. If - seen in the travelling direction TD - the ground ascends to the left, the bale B is tilted to the left. If the ground ascends to the right, the bale B is tilted to the right. It is further possible to select the tilting direction depending on properties of a potential depositing location, e.g. the presence of rigid objects or the moisture ratio.

In one implementation a human operator makes a decision at what time the bale B is to be deposited and whether to pivot the trough 2 to the left or to the right. The operator makes a corresponding user input into a suitable user terminal. This user terminal is mounted in the driver's cabin, i.e. on board of a pulling tractor or belongs to a remote device, e.g. to a smartphone. A control unit processes the inputs from the user terminal and generates control inputs for the hydraulic actuators 16.1, 16.2 depending on user inputs. The control unit can be mounted on board of the pulling tractor or of the baler.

In a further implementation the vehicle with the tilting unit comprises an inclination sensor. This inclination sensor measures a value indicative of the current inclination of the vehicle with the tilting unit around an axis parallel to the travelling direction TD. Preferably the inclination sensor and the control unit are mounted on board of a baler or of a wrapper to which the tilting unit is connected. The control unit processes signals from the inclination sensor.

In one application the measured inclination is displayed to the operator. Or an alert is given to the operator in the case of a high inclination. In a further application the control unit automatically decides at what time the bale B is to be deposited and whether to pivot the trough 2 with the bale B to the left or to the right. Depending on signals from the inclination sensor the control unit automatically generates control inputs for the hydraulic actuators 16.1, 16.2.

In one implementation the control unit does not cause the trough 2 to be tilted as long as the measured inclination is above given a threshold. If the measured inclination is below the given threshold, the control unit causes the trough 2 to be pivoted upwards, i.e. to the left if the ground ascends to the left with respect to the travelling direction TD and to the right if the ground ascends to the right seen in the travelling direction TD.

In the embodiment of Fig. 1 to Fig. 8 the tilting unit comprises a left actuator 16.1 and a right actuator 16.2. For pivoting the trough 2 with the bale B to the left the left actuator 16.1 is activated, i.e. expanded, and the right actuator 16.2 is not used. For pivoting the trough 2 with the bale B to the right the right actuator 16.2 is activated and the left actuator 16.1 is not used.

In an alternative implementation the tilting unit comprises only one vertical actuator 16, e.g. a hydraulic piston-cylinder unit, which is connected with the tilting unit frame 5 and with the trough 2. This one hydraulic actuator 16 is connected with a shiftable trough-side connecting member 19 such that the pivotal connection between the actuator 16 and the trough 2 can move from the position shown in Fig. 7 to the position shown in Fig. 8 and back. Preferably a guide rod is mounted at the lower side of a traversal beam 4.1, 4.2, ... of the trough 2 and is guided through an ear of the connecting element 19. Accordingly the frame-side connecting elements 18.1, 18.2 are replaced with one shiftable frame-side connecting element 18. This connecting element 18 can be shifted between the position shown in Fig. 7 (position of element 18.1) to the position shown in Fig. 8 (position of element 18.2) and back. A horizontal actuator shifting device (not shown) shifts the vertical hydraulic actuator 16 from the position shown in Fig. 7 to the position shown in Fig. 8 and back.

This embodiment saves a second vertical actuator. The horizontal shifting device only needs to shift the connecting member 19 but does not need to pivot the trough 2 with the bale B.

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**LIST OF REFERENCE SIGNS**

| | |
|---|---|
| 1 | ground-engaging wheel of the tilting unit, mounted at the holder 8 |
| 2 | pivotal trough, comprises the curved longitudinal beams 3.1, 3.2, ... and the traversal beams 4.1, 4.2, ... |
| 3.1, 3.2, ... | curved longitudinal beams of the trough 2 |
| 4.1, 4.2, ... | straight traversal beams of the trough 2 |
| 5 | frame of the tilting unit, comprises the longitudinal beams 6.1, 6.2 and the traversal beams 7.1, 7.2 |
| 6.1,6.2 | longitudinal beams of the tilting unit frame 5 |
| 7.1 | bearing for the spring-mounted bracket 9 |
| 7.2 | traversal beam of the tilting unit frame 5 |
| 8 | holder for the wheel 1, mounted at the longitudinal beams 6.1, 6.2 |
| 9 | spring-mounted bracket, prevents the bale B from rolling back, mounted at the bearing 7.1 |
| 10 | axle of the wheel 1, carried by the wheel holder 8 |
| 11.1, 11.2 | left supporting elements for the trough 2, mounted at the left longitudinal beam 6.1 of the frame 5 |
| 12.1, 12.2 | right supporting elements, for the trough 2, mounted at the right longitudinal beam 6.2 of the tilting unit frame 5 |
| 13.1, 13.2 | left damping elements, mounted at the left longitudinal bearing 3.1 |
| 14.1, 14.2 | right damping elements, mounted at the right longitudinal bearing 3.4 |
| 15 | bracket for connecting the tilting unit frame 5 with the wrapping table 20, is rigidly connected with the two longitudinal beams 6.1, 6.2 |
| 16.1 | vertical hydraulic actuator for pivoting the trough 2 to the left, serves as the first actuator, implemented as a hydraulic piston-cylinder unit |
| 16.2 | vertical hydraulic actuator for pivoting the trough 2 to the right, serves as the second actuator, implemented as a hydraulic piston-cylinder unit |
| 17 | stop element for the trough 2 |
| 18.1 | left frame-side actuator connecting element for pivotally connecting the left hydraulic actuator 16.1 with the left longitudinal beam 6.1 |
| 18.2 | right frame-side actuator connecting element for pivotally connecting the right hydraulic actuator 16.2 with the right longitudinal beam 6.2 |
| 19.1 | left trough-side connecting element, pivotally connects the left actuator 16.1 with the trough 2 |
| 19.2 | right trough-side connecting element, pivotally connects the right actuator 16.2 with the trough 2 |
| 20 | wrapping table, comprises the wrapper table frame 23.1, 23.2 the rollers 25.1, 25.2, and the belts 26 |
| 21.1, 21.2 | lateral guiding elements of the wrapping table 20, mounted at the lateral wrapping table frame part 23.1 |
| 22 | left hydraulic actuator for pivoting the wrapping table 20 with respect to the wrapper frame 27 |
| 23.1, 23.2 | longitudinal frame parts of the wrapping table 20 |
| 24 | traversal axle at which the bracket 15 is pivotally mounted |
| 25.1, 25.2 | driven rollers of the wrapping table 20 |
| 26 | conveyer belts of the wrapping table 20, driven by the rollers 25.1, 25.2 |
| 27 | frame of the wrapper, carries the wrapping table frame 23.1, 23.2 |
| B | wrapped round-cylindrical bale to be deposited |
| FF.l | left front face of the round-cylindrical bale B |
| FF.r | right front face of the round-cylindrical bale B |
| OMD | object moving direction in which the wrapping table actuator 22 pivots the wrapping table 20, thereby direction in which the bale B is moved from the wrapper onto the trough 2, is opposite to the travelling direction TD |
| TD | travelling direction of the wrapping apparatus, is opposite to the object moving direction OMD |
| TD.1, TD.2 | opposing directions in which the trough can be tilted |

## Claims

1. Wrapping apparatus for wrapping an object (B) and for depositing the wrapped object (B) on the ground,
wherein the object (B)
- comprises two front faces (FF.l, FF.r) and
- extends along and around a center axis (CA) reaching from one front face (FF.l) to the other front face (FF.r),
wherein the wrapping apparatus comprises
- a wrapper and
- a tilting unit,
wherein the wrapper is arranged to wrap the object (B) into wrapping material,
wherein the wrapping apparatus to move the wrapped object (B) from the wrapper in an object moving direction (OMD) onto the tilting unit and
wherein the tilting unit is arranged
- to tilt the wrapped object (B) on the tilting unit selectively into a first one or a second one of two opposing directions (TD.1, TD.2) which are both perpendicular or angular to the object moving direction (OMD) and
- to deposit the tilted object (B) onto one object front face (FF.l, FF.r) on the ground,
**characterized in that**
the tilting unit comprises
- a tilting unit frame (5),
- a trough (2) carried by the tilting unit frame (5), and
- a tilting actuator assembly (16.1, 16.2),
wherein the trough (2) is pivotal with respect to the tilting unit frame (5) into both opposing directions (TD.1, TD.2),
wherein the wrapper is arranged for causing the object (B)
- to move in the object moving direction (OMD) onto the trough (2) and
- to rest on the trough (2) with its center axis (CA) perpendicular to the object moving direction (OMD),
wherein the tilting actuator assembly (16.1, 16.2) is arranged to selectively pivot the trough (2) with respect to the tilting unit frame (5) selectively upwards against the force of gravity into a first one or a second one of two opposing directions (TD.1, TD.2), thereby tilting the object (B) on the trough (2) with respect to the object moving direction (OMD) onto the object front face (FF.l, FF.r).

2. Wrapping apparatus according to claim 1,
**characterized in that**
the tilting actuator assembly (16.1, 16.2) comprises
- a first tilting actuator (16.1) and
- a second tilting actuator (16.2),
wherein the first tilting actuator (16.1) is arranged to pivot the trough (2) with respect to the tilting unit frame (5) into the first one (TD.1) of the two opposing directions (TD.1, TD.2) and
wherein the second tilting actuator (16.2) is arranged to pivot the trough (2) with respect to the tilting unit frame (5) into the second one (TD.2) of the two opposing directions (TD.1, TD.2).

3. Wrapping apparatus according to one of the preceding claims,
**characterized in that**
the trough (2) extends along a middle axis parallel to the object moving direction (OMD), the tilting actuator assembly (16.1, 16.2) comprises
- one tilting actuator with a base part (18.1, 18.2) resting on the tilting unit frame (5) and
- an actuator shifting device, and
the tilting unit comprises an actuator guiding device,
wherein the actuator guiding device is arranged to guide the base part (18.1, 18.2) of the tilting actuator with respect to the trough (2) selectively
- into a first position in which the base part (18.1, 18.2) has a lateral offset with respect to the middle axis in a first offset direction or
- into a second position in which the base part (18.1, 18.2) has a lateral offset with respect to the middle axis in a second direction being opposite to the first offset direction,
wherein the actuator shifting device is arranged to shift the base part (18.1, 18.2) of the tilting actuator selectively
- into the first position or
- into the second position,
wherein the tilting actuator with the base part (18.1, 18.2) being in the first position is arranged to pivot the trough (2) with respect to the tilting unit frame (5) into a first direction and
wherein the tilting actuator with the base part (18.1, 18.2) being in the second position is arranged to pivot the trough (2) with respect to the tilting unit frame (5) into the second direction.

4. Wrapping apparatus according to claim 3,
**characterized in that**
the or at least one tilting actuator comprises a piston-cylinder unit (16.1, 16.2),
wherein expanding the piston-cylinder unit (16.1, 16.2) causes the trough (2) to tilt upwards around a trough pivoting axis parallel to the object moving direction (OMD) against the force of gravity.

5. Wrapping apparatus according to one of the preceding claims,
**characterized in that**
the trough (2) comprises a curved sheet
which is arranged to carry from below a segment of the circumferential surface of the wrapped object (B).

6. Wrapping apparatus according to one of the preceding claims,
**characterized in that**
the trough (2) comprises two sheets
which are rigidly connected with each other in an edge being perpendicular to the object moving direction (OMD),
wherein the trough (2) is arranged to carry the object (B) resting on both sheets.

7. Wrapping apparatus according to one of the preceding claims,
**characterized in that**
the tilting actuator assembly (16.1, 16.2)
- is in data connection with a control unit and
- is arranged to pivot the trough (2) with respect to the tilting unit frame (5) selectively into the first one or the second one of the two opposing directions (TD.1, TD.2)
depending on corresponding control inputs from the control unit.

8. Wrapping apparatus according to claim 7,
**characterized in that**
the control unit is arranged to generate the control inputs for causing the tilting actuator assembly (16.1, 16.2) to pivot the trough (2)
depending on corresponding user inputs.

9. Wrapping apparatus according to claim 7 or claim 8,
**characterized in that**
the control unit is in data connection with an inclination sensor,
wherein the inclination sensor is arranged to measure a value indicative of the inclination of the wrapping apparatus around an axis parallel to the object moving direction (OMD) and
wherein the control unit is arranged to automatically generate the control inputs for causing the tilting actuator assembly (16.1, 16.2) to pivot the trough (2) depending on signals from the inclination sensor.

10. Wrapping apparatus according to claim 9,
**characterized in that**
the control unit is arranged
- to check if the measured inclination is within a given inclination range and
- to cause the tilting actuator assembly (16.1, 16.2) to pivot the trough (2) only if the measured inclination is within the given range and
- to inhibit the tilting actuator assembly (16.1, 16.2) to pivot the trough (2) if or as long as the measured inclination is outside of the given range.

11. Wrapping apparatus according to one of the preceding claims,
**characterized in that**
the wrapper comprises
- a wrapping table (20),
- a wrapping table actuator (22),
- at least one holder for holding a reservoir with wrapping material, and
- a holder moving device,
wherein the wrapping table (20) is arranged to carry an object (B) to be wrapped,
wherein the holder moving device is arranged to move the or at least one holder with respect to the object (B) carried on the wrapping table (20), and
wherein the wrapping table actuator (22) is arranged to pivot the wrapping table (20) in the object moving direction (OMD) towards the tilting unit
for causing the object (B) to be moved from the wrapping table (20) onto the tilting unit.

12. Wrapping apparatus according to one of the preceding claims,
**characterized in that**
the wrapping apparatus comprises an object lifting device,
wherein the object lifting device is arranged
- to lift an object (B) to be wrapped from the ground and
- to place the lifted object (B) on the wrapper or on a part (20) of the wrapper.

13. Object forming and wrapping apparatus comprising
- an object forming apparatus and
- a wrapping apparatus according to one of the preceding claims,
wherein the wrapping apparatus is mechanically connected with the object forming apparatus,
wherein the object forming apparatus is arranged to form an object (B) in an object forming chamber and
wherein the object forming and wrapping apparatus is arranged to transfer the formed object on the trough (2) of the tilting unit.

14. Object forming and wrapping apparatus according to claim 13,
**characterized in that**
the wrapper is arranged to wrap the object (B) in the object forming chamber and
the object forming apparatus is arranged to eject the wrapped object (B) out of the object forming chamber,
wherein the object forming and wrapping apparatus is arranged to transfer the wrapped object (B) onto the trough (2).

15. Object forming and wrapping apparatus according to claim 13,
**characterized in that**
the wrapper is positioned outside of the object forming chamber (Ch) and
the object forming and wrapping apparatus is arranged to transfer the formed object (B) out of the object forming chamber (Ch) onto the wrapper.

16. Agricultural vehicle
- arranged to be moved over ground in a travelling direction (TD) and
- comprising a wrapping apparatus according to one of the preceding claims.

17. Agricultural vehicle according to claim 16
**characterized in that**
the travelling direction (TD) is opposite to or is parallel to the object moving direction (OMD).

18. Method for wrapping an object (B) and for depositing the wrapped object (B) on the ground,
wherein the object (B)
- comprises two front faces (FF.l, FF.r) and
- extends along and around a center axis (CA) reaching from one front face (FF.l) to the other front face (FF.r),
wherein the method is performed by using a wrapping apparatus comprising
- a wrapper and
- a tilting unit, and
wherein the method comprises the steps that
the object (B) is wrapped by the wrapper,
the wrapper causes the wrapped object (B) to move from the wrapper in an object moving direction (OMD) onto the tilting unit, and
the tilting unit
- tilts the wrapped object (B) on the tilting unit selectively into a first one or a second one of two opposing directions (TD.1, TD.2) which are both perpendicular or angular to the object moving direction (OMD) and
- deposits the tilted object (B) onto one object front face (FF.l, FF.r) on the ground,
**characterized in that**
the tilting unit comprises
- a tilting unit frame (5),
- a trough (2) carried by the tilting unit frame (5) and
- a tilting actuator assembly (16.1, 16.2),
wherein the trough (2) is pivotal with respect to the tilting unit frame (5) into both opposing directions (TD.1, TD.2),
wherein the step that the wrapped object (B) is moved onto the tilting unit comprises the step that
the object (B) is moved in the object moving direction (OMD) onto the trough (2) such that the center axis (CA) of the object (B) on the trough (2) is perpendicular to the object moving direction (OMD), and
wherein the step that the tilting unit tilts the object (B) onto one front face (FF.l, FF.r) comprises the step that
the tilting actuator assembly (16.1, 16.2) pivots the trough (2) with respect to the tilting unit frame (5) selectively upwards against the force of gravity into the first one or into the second one of the two opposing directions (TD.1, TD.2)
such that the tilted object (B) is deposited onto the object front face (FF.l, FF.r).

19. Wrapping method according to claim 18,
**characterized in that**
the tilting actuator assembly (16.1, 16.2) comprises
- a first tilting actuator (16.1) and
- a second tilting actuator (16.2),
wherein the step that the tilting actuator assembly (16.1, 16.2) selectively pivots the trough (2) into one of the opposing directions (TD.1, TD.2) comprises the steps that
- either the first tilting actuator (16.1) pivots the trough (2) with respect to the tilting unit frame (5) into the first one (TD.1) of the opposing directions (TD.1, TD.2) and the second tilting actuator (16.2) is in a parking mode
- or the second tilting actuator (16.2) pivots the trough (2) with respect to the tilting unit frame (5) into the second one (TD.2) of the opposing directions (TD.1, TD.2) and the first tilting actuator (16.1) is in a parking mode.

20. Wrapping method according to claim 18,
**characterized in that**
the tilting actuator assembly (16.1, 16.2) comprises
- one tilting actuator with a base part (18.1, 18.2) resting on the tilting unit frame (5) and
- an actuator shifting device and
the trough (2) extends along a middle axis parallel to the object moving direction (OMD), wherein the step that the tilting actuator assembly (16.1, 16.2) selectively pivots the trough (2) into one of the opposing directions (TD.1, TD.2) comprises the steps that
- either the actuator shifting device shifts the base part (18.1, 18.2) of the tilting actuator into a first offset position in which the base part has a lateral offset with respect to the middle axis in a first offset direction and
the tilting actuator being in the first offset position pivots the trough (2) with respect to the tilting unit frame (5) into a first one (TD.1) of the two opposing directions (TD.1, TD.2)
- or the actuator shifting device shifts the base part (18.1, 18.2) of the piston-cylinder device into a second offset position in which the base part has a lateral offset with respect to the middle axis in a second offset direction which is opposite to the first offset direction and
the tilting actuator being in the second offset position pivots the trough (2) with respect to the tilting unit frame (5) into the second one (TD.2) of the two opposing directions (TD.1, TD.2).

21. Wrapping method according to one of the claims 18 to 20,
**characterized in that**
the step that the tilting actuator assembly (16.1, 16.2) selectively pivots the trough (2) into one of the opposing directions (TD.1, TD.2) comprises the steps that
- an inclination sensor measures the inclination of the wrapping apparatus around an axis parallel to the object moving direction (OMD),
- the tilting actuator assembly (16.1, 16.2) pivots the trough (2) to first one (TD.1) of the two opposing directions (TD.1, TD.2) if the ground on which the wrapping apparatus is operated ascends to the first direction, and
- the tilting actuator assembly (16.1, 16.2) pivots the trough (2) to the second one (TD.2) of the two opposing directions (TD.1, TD.2) if the ground ascends to the second direction.

## Patentansprüche

1. Einwickelvorrichtung zum Einwickeln eines Objekts (B) und zum Ablegen des eingewickelten Objekts (B) auf dem Boden,
wobei das Objekt (B)
- zwei Vorderseiten (FF.l, FF.r) aufweist und
- sich entlang und um eine Mittelachse (CA) erstreckt, die sich von einer Frontfläche (FF.l) zu der anderen Frontfläche (FF.r) erstreckt,
wobei die Einwickelvorrichtung
- einen Einwickler und
- eine Kippeinheit
aufweist,
wobei der Einwickler dazu angeordnet ist, das Objekt (B) in Einwickelmaterial einzuwickeln, wobei die Einwickelvorrichtung dazu angeordnet ist, das eingewickelte Objekt (B) von dem Einwickler in eine Objektbewegungsrichtung (OMD) auf die Kippeinheit zu bewegen, und wobei die Kippeinheit dazu angeordnet ist,
- das eingewickelte Objekt (B) auf der Kippeinheit wählbar in eine erste oder eine zweite von zwei entgegengesetzten Richtungen (TD.1, TD.2) zu kippen, die beide rechtwinklig oder winklig zu der Objektbewegungsrichtung (OMD) sind, und
- das gekippte Objekt (B) auf einer Objektfrontfläche (FF.l, FF.r) auf dem Boden abzustellen,
**dadurch gekennzeichnet, dass**
die Kippeinheit
- einen Kippeinheitrahmen (5),
- einen Träger (2), der von dem Kippeinheitrahmen (5) getragen wird, und
- eine Kippaktuatoranordnung (16.1, 16.2)
aufweist,
wobei der Träger (2) in Bezug auf den Kippeinheitrahmen (5) in beide entgegengesetzten Richtungen (TD.1, TD.2) verschwenkbar ist,
wobei der Einwickler dazu angeordnet ist, zu bewirken, dass
- sich das Objekt (B) in die Objektbewegungsrichtung (OMD) auf den Träger (2) bewegt und
- sich das Objekt (B) mit seiner Mittelachse (CA) rechtwinklig zu der Objektbewegungsrichtung (OMD) auf dem Träger (2) abstützt,
wobei die Kippaktuatoranordnung (16.1, 16.2) dazu angeordnet ist, den Träger (2) in Bezug auf den Kippeinheitrahmen (5) wahlweise aufwärts entgegen der Schwerkraft in eine erste oder eine zweite von zwei entgegengesetzten Richtungen (TD.1, TD.2) zu verschwenken,
wodurch sie das Objekt (B) auf dem Träger (2) in Bezug auf die Objektbewegungsrichtung (OMD) auf die Objektfrontfläche (FF.l, FF.r) kippt.

2. Einwickelvorrichtung nach Anspruch 1,
**dadurch gekennzeichnet, dass**
die Kippaktuatoranordnung (16.1, 16.2)
- einen ersten Kippaktuator (16.1) und
- einen zweiten Kippaktuator (16.2)
aufweist,
wobei der erste Kippaktuator (16.1) dazu angeordnet ist, den Träger (2) in Bezug auf den Kippeinheitrahmen (5) in die erste Richtung (TD.1) der zwei entgegengesetzten Richtungen (TD.1, TD.2) zu verschwenken, und
wobei der zweite Kippaktuator (16.2) dazu angeordnet ist, den Träger (2) in Bezug auf den Kippeinheitrahmen (5) in die zweite Richtung (TD.2) der zwei entgegengesetzten Richtungen (TD.1, TD.2) zu verschwenken.

3. Einwickelvorrichtung nach einem der vorhergehenden Ansprüche,
**dadurch gekennzeichnet, dass**
sich der Träger (2) entlang einer Mittelachse parallel zu der Objektbewegungsrichtung (OMD) erstreckt,
die Kippaktuatoranordnung (16.1, 16.2)
- einen Kippaktuator mit einem Basisteil (18.1, 18.2), auf dem Kippeinheitrahmen (5) abgestützt, und
- eine Aktuatorverschiebeeinrichtung
aufweist und
die Kippeinheit eine Aktuatorführungseinrichtung aufweist,
wobei die Aktuatorführungseinrichtung dazu angeordnet ist, den Basisteil (18.1, 18.2) des Kippaktuators in Bezug auf den Träger (2) wahlweise
- in eine erste Position, in der der Basisteil (18.1, 18.2) einen seitlichen Versatz in Bezug auf die Mittelachse in eine erste Versatzrichtung hat, oder
- in eine zweite Position, in der der Basisteil (18.1, 18.2) einen seitlichen Versatz in Bezug auf die Mittelachse in eine zweite Versatzrichtung hat, die der ersten Versatzrichtung entgegengesetzt ist,
zu führen,
wobei die Aktuatorverschiebeeinrichtung dazu angeordnet ist, den Basisteil (18.1, 18.2) des Kippaktuators wahlweise
- in die erste Position oder
- in die zweite Position
zu verschieben,
wobei der Kippaktuator dazu angeordnet ist, den Träger (2) in Bezug auf den Kippeinheitrahmen (5) in eine erste Richtung zu verschwenken, wenn der Basisteil (18.1, 18.2) in der ersten Position ist, und
der Kippaktuator dazu angeordnet ist, den Träger (2) in Bezug auf den Kippeinheitrahmen (5) in die zweite Richtung zu verschwenken, wenn sich der Basisteil (18.1, 18.2) in der zweiten Position befindet.

4. Einwickelvorrichtung nach Anspruch 3,
**dadurch gekennzeichnet, dass**
der oder mindestens ein Kippaktuator eine Kolben-Zylinder-Einheit (16.1, 16.2) aufweist,
wobei ein Expandieren der Kolben-Zylinder-Einheit (16.1, 16.2) dafür sorgt, dass der Träger (2) um eine Trägerschwenkachse parallel zu der Objektbewegungsrichtung (OMD) entgegen der Schwerkraft aufwärts kippt.

5. Einwickelvorrichtung nach einem der vorhergehenden Ansprüche,
**dadurch gekennzeichnet, dass**
der Träger (2) eine gekrümmte Platte aufweist,
die dazu angeordnet ist, einen Teilabschnitt der Umfangsfläche des eingewickelten Objekts (B) von unten zu tragen.

6. Einwickelvorrichtung nach einem der vorhergehenden Ansprüche,
**dadurch gekennzeichnet, dass**
der Träger (2) zwei Platten aufweist,
die an einer Kante, die rechtwinklig zu der Objektbewegungsrichtung (OMD) ist, starr miteinander verbunden sind,
wobei der Träger (2) dazu angeordnet ist, das Objekt (B) zu tragen, während es auf beiden Platten ruht.

7. Einwickelvorrichtung nach einem der vorhergehenden Ansprüche,
**dadurch gekennzeichnet, dass**
die Kippaktuatoranordnung (16.1, 16.2)
- in Datenverbindung mit einer Steuer- und/oder Regeleinheit steht und
- dazu angeordnet ist, den Träger (2) in Bezug auf den Kippeinheitrahmen (5) wahlweise in die erste oder die zweite der zwei entgegengesetzten Richtungen (TD.1, TD.2) zu verschwenken,
wobei dies von entsprechenden Steuer- und/oder Regeleingangssignalen der Steuer- und/oder Regeleinheit abhängt.

8. Einwickelvorrichtung nach Anspruch 7,
**dadurch gekennzeichnet, dass**
die Steuer- und/oder Regeleinheit dazu eingerichtet ist, die Steuer- und/oder Regeleingangssignale zum Auslösen des Kippens des Trägers (2) durch die Kippaktuatoranordnung (16.1, 16.2) in Abhängigkeit von entsprechenden Benutzereingaben zu generieren.

9. Einwickelvorrichtung nach Anspruch 7 oder 8,
**dadurch gekennzeichnet, dass**
die Steuer- und/oder Regeleinheit in Datenverbindung mit einem Neigungssensor steht,
wobei der Neigungssensor dazu eingerichtet ist, einen Wert zu messen, der eine Neigung der Einwickelvorrichtung um eine Achse parallel zu der Objektbewegungsrichtung (OMD) anzeigt,
und
wobei die Kontrolleinheit dazu eingerichtet ist, automatisch die Steuer- und/oder Regeleingangssignale für das Auslösen des Kippens des Trägers (2) durch die Kippaktuatoranordnung (16.1, 16.2)
in Abhängigkeit von Signalen des Neigungssensors zu generieren.

10. Einwickelvorrichtung nach Anspruch 9,
**dadurch gekennzeichnet, dass**
die Steuer- und/oder Regeleinheit dazu eingerichtet ist,
- zu prüfen, ob die gemessene Neigung innerhalb eines vorgegebenen Neigungsbereichs liegt, und
- nur dann auszulösen, dass die Kippaktuatoranordnung (16.1, 16.2) den Träger (2) verschwenkt, wenn die gemessene Neigung innerhalb des vorgegebenen Bereichs liegt, und
- die Kippaktuatoranordnung (16.1, 16.2) davon abzuhalten, den Träger (2) zu verschwenken, wenn oder solange die gemessene Neigung außerhalb des vorgegebenen Bereichs liegt.

11. Einwickelvorrichtung nach einem der vorhergehenden Ansprüche,
**dadurch gekennzeichnet, dass**
der Einwickler
- einen Einwickeltisch (20),
- einen Einwickeltischaktuator (22),
- mindestens einen Halter zum Halter eines Vorratsbehälters mit Einwickelmaterial und
- eine Halterbewegungseinrichtung
aufweist,
wobei der Einwickeltisch (20) dazu angeordnet ist, ein einzuwickelndes Objekt (B) zu tragen, wobei das Halterbewegungseinrichtung dazu angeordnet ist, den oder mindestens einen Halter in Bezug auf das Objekt (B) zu bewegen, das auf dem Einwickeltisch (20) getragen wird, und wobei der Einwickeltischaktuator (22) dazu angeordnet ist, den Einwickeltisch (20) in die Objektbewegungsrichtung (OMD) in Richtung auf die Kippeinheit zu verschwenken,
um auszulösen, dass das Objekt (B) von dem Einwickeltisch (20) auf die Schwenkeinheit bewegt wird.

12. Einwickelvorrichtung nach einem der vorhergehenden Ansprüche,
**dadurch gekennzeichnet, dass**
die Einwickelvorrichtung ein Objekthebeeinrichtung aufweist,
wobei das Objekthebeeinrichtung dazu angeordnet ist,
- ein einzuwickelndes Objekt (B) vom Boden aufzuheben und
- das angehobene Objekt (B) auf den Einwickler oder einen Teil (20) des Einwicklers abzulegen.

13. Objektform- und Einwickelvorrichtung mit
- einer Objektformvorrichtung und
- einer Einwickelvorrichtung nach einem der vorhergehenden Ansprüche,
wobei die Einwickelvorrichtung mechanisch mit der Objektformvorrichtung verbunden ist,
wobei die Objektformvorrichtung dazu angeordnet ist, ein Objekt (B) in einer Objektformkammer zu formen, und
wobei die Objektform- und Einwickelvorrichtung dazu angeordnet ist, das geformte Objekt auf den Träger (2) der Kippeinheit zu transferieren.

14. Objektform- und Einwickelvorrichtung nach Anspruch 13,
**dadurch gekennzeichnet, dass**
der Einwickler dazu angeordnet ist, das Objekt (B) in der Objektformkammer einzuwickeln, und die Objektformvorrichtung dazu angeordnet ist, das eingewickelte Objekt (B) aus der Objektformkammer auszuwerfen,
wobei die Objektform- und Einwickelvorrichtung dazu angeordnet ist, das eingewickelte Objekt (B) auf den Träger (2) zu transferieren.

15. Objektform- und Einwickelvorrichtung nach Anspruch 13,
**dadurch gekennzeichnet, dass**
der Einwickler außerhalb der Objektformkammer (Ch) angeordnet ist und
die Objektform- und Einwickelvorrichtung dazu angeordnet ist, das geformte Objekt (B) aus der Objektformkammer (Ch) auf den Einwickler zu transferieren.

16. Landwirtschaftliches Fahrzeug
- das dazu eingerichtet ist, in einer Reiserichtung (TD) über den Boden bewegt zu werden, und
- das eine Einwickelvorrichtung nach einem der vorhergehenden Ansprüche aufweist.

17. Landwirtschaftliches Fahrzeug nach Anspruch 16,
**dadurch gekennzeichnet, dass**
die Reiserichtung (TD) entgegengesetzt oder parallel zu der Objektbewegungsrichtung (OMD) verläuft.

18. Verfahren zum Einwickeln eines Objekts (B) und zum Ablegen des eingewickelten Objekts (B) auf dem Boden,
wobei das Objekt (B)
- zwei Frontfläche (FF.l, FF.r) aufweist und
- sich entlang und um eine Mittelachse (CA) erstreckt, die sich von der einen Frontfläche (FF.l) zu der anderen Frontfläche (FF.r) erstreckt,
wobei das Verfahren unter Benutzung einer Einwickelvorrichtung mit
- einem Einwickler und
- einer Kippeinheit
ausgeführt wird und
wobei das Verfahren die Schritte aufweist, dass
das Objekt (B) durch den Einwickler eingewickelt wird,
der Einwickler bewirkt, dass sich das eingewickelte Objekt (B) von dem Einwickler in eine Objektbewegungsrichtung (OMD) auf die Kippeinheit bewegt und
die Kippeinheit
- das eingewickelte Objekt (B) auf der Kippeinheit wahlweise in eine erste oder eine zweite von zwei entgegengesetzten Richtungen (TD.1, TD.2), die beide rechtwinklig oder winklig zu der Objektbewegungsrichtung (OMD) sind, kippt und
- das gekippte Objekt (B) auf eine der Objektfrontflächen (FF.l, FF.r) auf dem Boden absetzt,
**dadurch gekennzeichnet, dass**
die Kippeinheit
- einen Kippeinheitrahmen (5),
- einen von dem Kippeinheitrahmen (5) getragenen Träger (2) und
- eine Kippaktuatoranordnung (16.1, 16.2)
aufweist,
wobei der Träger (2) in Bezug auf den Kippeinheitsrahmen (5) in beide entgegengesetzten Richtungen (TD.1, TD.2) verschwenkbar ist,
wobei der Schritt, dass das eingewickelte Objekt (B) in Bezug auf die Kippeinheit bewegt wird, den Schritt aufweist,
dass das Objekt (B) in die Objektbewegungsrichtung (OMD) auf den Träger (2) bewegt wird,
so dass die Mittelachse (CA) des Objekts (B) auf dem Träger (2) rechtwinklig zu der Objektbewegungsrichtung (OMD) verläuft, und
wobei der Schritt, dass die Kippeinheit das Objekt (B) auf eine Frontfläche (FF.l, FF.r) kippt, den Schritt aufweist, dass
die Kippaktuaturanordnung (16.1, 16.2) den Träger (2) in Bezug auf den Kippeinheitsrahmen (5) wahlweise aufwärts entgegen der Schwerkraft in die erste oder die zweite der zwei entgegengesetzten Richtungen (TD.1, TD.2) verschwenkt,
so dass das gekippte Objekt (B) auf der Objektfrontfläche (FF.l, FF.r) abgelegt wird.

19. Einwickelverfahren nach Anspruch 18,
**dadurch gekennzeichnet, dass**
die Kippaktuatoranordnung (16.1, 16.2)
- einen ersten Kippaktuator (16.1) und
- einen zweiten Kippaktuator (16.2)
aufweist,
wobei der Schritt, dass die Kippaktuatoranordnung (16.1, 16.2) den Träger (2) wahlweise in eine der entgegengesetzten Richtungen (TD.1, TD.2) verschwenkt, den Schritt aufweist, dass
- entweder der erste Kippaktuator (16.1) den Träger (2) in Bezug auf den Kippeinheitrahmen (5) in die erste Richtung (TD.1) der entgegengesetzten Richtung (TD.1, TD.2) verschwenkt und sich der zweite Kippaktuator (16.2) in einem Parkmodus befindet
- oder der zweite Kippaktuator (16.2) den Träger in Bezug auf den Kippeinheitrahmen (5) in die zweite Richtung (TD.2) der entgegengesetzten Richtung (TD.1, TD.2) verschwenkt und sich der erste Kippaktuator (16.1) in einem Parkmodus befindet.

20. Einwickelverfahren nach Anspruch 18,
**dadurch gekennzeichnet, dass**
die Kippaktuatoranordnung (16.1, 16.2)
- einen Kippaktuator mit einem Basisteil (18.1, 18.2), auf dem Kippeinheitrahmen (5) abgestützt, und
- eine Aktuatorverschiebeeinrichtung
aufweist und
sich der Träger (2) entlang einer Mittelachse parallel zu der Objektbewegungsrichtung (OMD) erstreckt,
wobei der Schritt, dass die Kippaktuatoranordnung (16.1, 16.2) den Träger wahlweise in eine der entgegengesetzten Richtungen (TD.1, TD.2) verschwenkt, die Schritte aufweist, dass
- entweder die Aktuatorverschiebevorrichtung den Basisteil (18.1, 18.2) des Kippaktuators in eine erste Versatzposition verschiebt, in der der Basisteil einen seitlichen Versatz in Bezug auf die Mittelachse in eine erste Versatzrichtung hat, und
der Kippaktuator, der sich in der ersten Versatzposition befindet, den Träger (2) in Bezug auf den Kippeinheitsrahmen (5) in eine erste Richtung (TD.1) der zwei entgegengesetzten Richtungen (TD.1, TD2) verschwenkt
- oder die Aktuatorverschiebevorrichtung den Basisteil (18.1, 18.2) einer Kolben-Zylinder-Einheit in eine zweite Versatzposition verschiebt, in der der Basisteil einen seitlichen Versatz in Bezug auf die Mittelachse in eine zweite, der ersten Versatzrichtung entgegengesetzte Versatzrichtung hat, und
der Kippaktuator, der sich in der zweiten Versatzposition befindet, den Träger (2) in Bezug auf den Kippeinheitsrahmen (5) in eine zweite Richtung (TD.2) der zwei entgegengesetzten Richtungen (TD.1, TD2) verschwenkt.

21. Einwickelverfahren nach einem der Ansprüche 18 bis 20,
**dadurch gekennzeichnet, dass**
der Schritt, dass die Kippaktuatoranordnung (16.1., 16.2) den Träger (2) wahlweise in eine der entgegengesetzten Richtungen (TD.1, TD.2) verschwenkt, die Schritte aufweist, dass
- ein Neigungssensor die Neigung der Einwickelvorrichtung um eine Achse parallel zu der Objektbewegungsrichtung (OMD) misst,
- die Kippaktuatoranordnung (16.1, 16.2) den Träger (2) in die erste Richtung (TD.1) der zwei entgegengesetzten Richtungen (TD.1, TD.2) verschwenkt, falls der Boden, auf dem die Einwickelvorrichtung betrieben wird, in die erste Richtung ansteigt, und
- die Kippaktuatoranordnung (16.1, 16.2) den Träger (2) in die zweite Richtung (TD.2) der zwei entgegengesetzten Richtungen (TD.1, TD.2) verschwenkt, falls der Boden in die zweite Richtung ansteigt.

## Revendications

1. Dispositif d'emballage destiné à emballer un objet (B) et à déposer l'objet (B) emballé sur le sol,
dans lequel l'objet (B)
- comprend deux faces frontales (FF.l, FF.r) et
- s'étend le long et autour d'un axe central (CA) reliant la première face frontale (FF.l) à l'autre face frontale (FF.r),
dans lequel le dispositif d'emballage comprend :
- un élément d'emballage et
- une unité de basculement,
dans lequel l'élément d'emballage est agencé de manière à emballer l'objet (B) dans un matériau d'emballage,
dans lequel le dispositif d'emballage est destiné à déplacer l'objet (B) emballé à partir de l'élément d'emballage suivant une direction de déplacement d'objet (OMD) vers l'unité de basculement et
dans lequel l'unité de basculement est agencée de manière à :
- faire basculer l'objet (B) emballé sur l'unité de basculement de manière sélective dans une première ou une seconde parmi deux directions opposées (TD.1, TD.2) qui sont toutes deux perpendiculaires ou orientées angulairement par rapport à la direction de déplacement d'objet (OMD) et
déposer l'objet (B) basculé sur une face frontale d'objet (FF.l, FF.r) sur le sol, **caractérisé en ce que**
l'unité de basculement comprend :
- un bâti d'unité de basculement (5),
- un élément cintré (2) supporté par le bâti d'unité de basculement (5), et
- un ensemble d'actionneur de basculement (16.1, 16.2),
dans lequel l'élément cintré (2) peut pivoter par rapport au bâti d'unité de basculement (5) dans les deux directions opposées (TD.1, TD.2),
dans lequel l'élément d'emballage est agencé afin d'amener l'objet (B)
- à se déplacer dans la direction de déplacement d'objet (OMD) sur l'élément cintré (2) et
- à reposer sur l'élément cintré (2) avec son axe central (CA) perpendiculaire à la direction de déplacement d'objet (OMD),
dans lequel l'ensemble d'actionneur de basculement (16.1, 16.2) est agencé afin de faire pivoter de manière sélective l'élément cintré (2) par rapport au bâti d'unité de basculement (5) de manière sélective vers le haut contre l'action de la gravité dans une première ou une seconde parmi deux directions opposées (TD.1, TD.2),
basculant ainsi l'objet (B) sur l'élément cintré (2) par rapport à la direction de déplacement d'objet (OMD) sur la face frontale d'objet (FF.l, FF.r).

2. Dispositif d'emballage selon la revendication 1,
**caractérisé en ce que**
l'ensemble d'actionneur de basculement (16.1, 16.2) comprend :
- un premier actionneur de basculement (16.1) et
- un second actionneur de basculement (16.2),
dans lequel le premier actionneur de basculement (16.1) est agencé afin de faire pivoter l'élément cintré (2) par rapport au bâti d'unité de basculement (5) dans la première (TD.1) des deux directions opposées (TD.1, TD.2) et
dans lequel le second actionneur de basculement (16.2) est agencé afin de faire pivoter l'élément cintré (2) par rapport au bâti d'unité de basculement (5) dans la seconde (TD.2) des deux directions opposées (TD.1, TD.2).

3. Dispositif d'emballage selon l'une des revendications précédentes,
**caractérisé en ce que**
l'élément cintré (2) s'étend suivant un axe central parallèle à la direction de déplacement d'objet (OMD),
l'ensemble d'actionneur de basculement (16.1, 16.2) comprend :
- un premier actionneur de basculement avec une partie de base (18.1, 18.2) reposant sur le bâti d'unité de basculement (5) et
- un dispositif de translation d'actionneur, et
l'unité de basculement comprend un dispositif de guidage d'actionneur,
dans lequel le dispositif de guidage d'actionneur est agencé afin de guider la partie de base (18.1, 18.2) de l'actionneur de basculement par rapport à l'élément cintré (2) de manière sélective :
- dans une première position dans laquelle la partie de base (18.1, 18.2) présente un décalage latéral par rapport à l'axe central dans une première direction de décalage ou
- dans une seconde position dans laquelle la partie de base (18.1, 18.2) présente un décalage latéral par rapport à l'axe central dans une seconde direction qui est opposée à la première direction de décalage,
dans lequel le dispositif de translation d'actionneur est agencé de manière à déplacer la partie de base (18.1, 18.2) de l'actionneur de basculement de manière sélective :
- dans la première position ou
- dans la seconde position,
dans lequel l'actionneur de basculement avec la partie de base (18.1, 18.2) placée dans la première position est agencé de manière à faire pivoter l'élément cintré (2) par rapport au bâti d'unité de basculement (5) dans une première direction et
dans lequel l'actionneur de basculement, avec la partie de base (18.1, 18.2) placée dans la seconde position, est agencé de manière à faire pivoter l'élément cintré (2) par rapport au bâti d'unité de basculement (5) dans la seconde direction.

4. Dispositif d'emballage selon la revendication 3,
**caractérisé en ce que**
le ou au moins un actionneur de basculement comprend une unité à piston et cylindre (16.1, 16.2),
dans lequel l'expansion de l'unité à piston et cylindre (16.1, 16.2) provoque le basculement de l'élément cintré (2) vers le haut autour d'un axe de pivotement d'élément cintré parallèle à la direction de déplacement d'objet (OMD) contre l'action de la gravité.

5. Dispositif d'emballage selon l'une des revendications précédentes,
**caractérisé en ce que**
l'élément cintré (2) comprend une tôle courbe
qui est agencée de manière à supporter par le dessous un segment de la surface circonférentielle de l'objet (B) emballé.

6. Dispositif d'emballage selon l'une des revendications précédentes,
**caractérisé en ce que**
l'élément cintré (2) comprend deux tôles
qui sont reliées de manière rigide l'une avec l'autre suivant un bord qui est perpendiculaire à la direction de déplacement d'objet (OMD),
dans lequel l'élément cintré (2) est agencé de manière à transporter l'objet (B) reposant sur les deux tôles.

7. Dispositif d'emballage selon l'une des revendications précédentes,
**caractérisé en ce que**
l'ensemble d'actionneur de basculement (16.1, 16.2)
- est en liaison numérique avec une unité de commande et
- est agencé de manière à faire pivoter l'élément cintré (2) par rapport au bâti d'unité de basculement (5) de manière sélective dans la première ou la seconde parmi les deux directions opposées (TD.1, TD.2)
en fonction d'entrées de commande correspondantes à partir de l'unité de commande.

8. Dispositif d'emballage selon la revendication 7,
**caractérisé en ce que**
l'unité de commande est agencée de manière à produire des entrées de commande afin d'amener l'ensemble d'actionneur de basculement (16.1, 16.2) à faire pivoter l'élément cintré (2)
en fonction d'entrées d'utilisateur correspondantes.

9. Dispositif d'emballage selon la revendication 7 ou 8,
**caractérisé en ce que**
l'unité de commande est en liaison numérique avec un capteur d'inclinaison,
dans lequel le capteur d'inclinaison est agencé afin de mesurer une valeur représentative de l'inclinaison du dispositif d'emballage autour d'un axe parallèle à la direction de déplacement d'objet (OMD) et
dans lequel l'unité de commande est agencée afin de produire de manière automatique les entrées de commande destinées à amener l'ensemble d'actionneur de basculement (16.1, 16.2) à faire pivoter l'élément cintré (2) en fonction de signaux provenant du capteur d'inclinaison.

10. Dispositif d'emballage selon la revendication 9,
**caractérisé en ce que**
l'unité de commande est agencée de manière à :
- contrôler si l'inclinaison mesurée est comprise dans une plage d'inclinaison donnée et
- provoquer le pivotement par l'ensemble d'actionneur de basculement (16.1, 16.2) de l'élément cintré (2) uniquement si l'inclination mesurée est comprise dans la plage donnée et
- inhiber le pivotement par l'ensemble d'actionneur de basculement (16.1, 16.2) de l'élément cintré (2) si, ou tant que, l'inclinaison mesurée est à l'extérieur de la plage donnée.

11. Dispositif d'emballage selon l'une des revendications précédentes, **caractérisé en ce que**
l'élément d'emballage comprend :
- une table d'emballage (20),
- un actionneur de table d'emballage (22),
- au moins un élément de retenue destiné à retenir un réservoir avec un matériau d'emballage, et
- un dispositif de déplacement d'élément de retenue,
dans lequel la table d'emballage (20) est agencée de manière à supporter un objet (B) à emballer,
dans lequel le dispositif de déplacement d'élément de retenue est agencé de manière à déplacer le ou au moins un élément de retenue par rapport à l'objet (B) supporté sur la table d'emballage (20), et
dans lequel l'actionneur de table d'emballage (22) est agencé de manière à faire pivoter la table d'emballage (20) dans la direction de déplacement d'objet (OMD) vers l'unité de basculement
afin de provoquer le déplacement de l'objet (B) à partir de la table d'emballage (20) vers l'unité de basculement.

12. Dispositif d'emballage selon l'une des revendications précédentes,
**caractérisé en ce que**
le dispositif d'emballage comprend un dispositif de levage d'objet,
dans lequel le dispositif de levage d'objet est agencé de manière à :
- soulever un objet (B) à emballer à partir du sol et
- placer l'objet soulevé (B) sur l'élément d'emballage ou sur une partie (20) de l'élément d'emballage.

13. Dispositif de formation et d'emballage d'objet comprenant :
- un dispositif de formation d'objet et
- un dispositif d'emballage selon l'une des revendications précédentes,
dans lequel le dispositif d'emballage est relié mécaniquement au dispositif de formation d'objet,
dans lequel le dispositif de formation d'objet est agencé de manière à former un objet (B) dans une chambre de formation d'objet et
dans lequel le dispositif de formation et d'emballage d'objet est agencé de manière à transférer l'objet formé sur l'élément cintré (2) de l'unité de basculement.

14. Dispositif de formation et d'emballage d'objet selon la revendication 13,
**caractérisé en ce que**
l'élément d'emballage est agencé de manière à emballer l'objet (B) dans la chambre de formation d'objet et
le dispositif de formation d'objet est agencé de manière à éjecter l'objet (B) emballé hors de la chambre de formation d'objet,
dans lequel le dispositif de formation et d'emballage d'objet est agencé de manière à transférer l'objet (B) emballé sur l'élément cintré (2).

15. Dispositif de formation et d'emballage d'objet selon la revendication 13,
**caractérisé en ce que**
l'élément d'emballage est positionné à l'extérieur de la chambre de formation d'objet (Ch) et
le dispositif de formation et d'emballage d'objet est agencé de manière à transférer l'objet (B) formé hors de la chambre de formation d'objet (Ch) sur l'élément d'emballage.

16. Véhicule agricole
- agencé de manière à être déplacé au sol dans une direction de déplacement (TD) et
- comprenant un dispositif d'emballage selon l'une des revendications précédentes.

17. Véhicule agricole selon la revendication 16
**caractérisé en ce que**
la direction de déplacement (TD) est opposée ou est parallèle à la direction de déplacement d'objet (OMD).

18. Procédé d'emballage d'un objet (B) ou destiné à déposer l'objet (B) emballé sur le sol,
dans lequel l'objet (B)
- comprend deux faces frontales (FF.l, FF.r) et
- s'étend le long et autour d'un axe central (CA) reliant la première face frontale (FF.l) à l'autre face frontale (FF.r),
dans lequel le procédé est mis en oeuvre en utilisant un dispositif d'emballage comprenant :
- un élément d'emballage et
- une unité de basculement, et
dans lequel le procédé comprend les étapes dans lesquelles l'objet (B) est emballé par l'élément d'emballage,
l'élément d'emballage provoque le déplacement de l'objet (B) emballé à partir de l'élément d'emballage dans une direction de déplacement d'objet (OMD) sur l'unité de basculement, et
l'unité de basculement
- fait basculer l'objet (B) emballé sur l'unité de basculement de manière sélective dans une première ou une seconde parmi deux directions opposées (TD.1, TD.2) qui sont toutes deux perpendiculaires ou orientées angulairement par rapport à la direction de déplacement d'objet (OMD) et
- dépose l'objet (B) basculé sur une première face frontale d'objet (FF.l, FF.r) sur le sol,
**caractérisé en ce que**
l'unité de basculement comprend :
- un bâti d'unité de basculement (5),
- un élément cintré (2) supporté par le bâti d'unité de basculement (5) et
- un ensemble d'actionneur de basculement (16.1, 16.2),
dans lequel l'élément cintré (2) peut pivoter par rapport au bâti d'unité de basculement (5) dans deux directions opposées (TD.1, TD.2),
dans lequel l'étape dans laquelle l'objet (B) emballé est déplacé sur l'unité de basculement comprend l'étape dans laquelle
l'objet (B) est déplacé dans la direction de déplacement d'objet (OMD) sur l'élément cintré (2) de telle sorte que l'axe central (CA) de l'objet (B) sur l'élément cintré (2) est perpendiculaire à la direction de déplacement d'objet (OMD), et
dans lequel l'étape dans laquelle l'unité de basculement fait basculer l'objet (B) sur une première face frontale (FF.l, FF.r)
comprend l'étape dans laquelle
l'ensemble d'actionneur de basculement (16.1, 16.2) fait pivoter l'élément cintré (2) par rapport au bâti d'unité de basculement (5) de manière sélective vers le haut contre l'action de la gravité dans la première ou la seconde des deux directions opposées (TD.1, TD.2)
de telle sorte que l'objet (B) basculé est déposé sur la face frontale (FF.l, FF.r) de l'objet.

19. Procédé d'emballage selon la revendication 18,
**caractérisé en ce que**
l'ensemble d'actionneur de basculement (16.1, 16.2) comprend :
- un premier actionneur de basculement (16.1) et
- un second actionneur de basculement (16.2),
dans lequel l'étape dans laquelle l'ensemble d'actionneur de basculement (16.1, 16.2) fait pivoter de manière sélective l'élément cintré (2) dans l'une des directions opposées (TD.1, TD.2) comprend les étapes dans lesquelles :
- soit le premier actionneur de basculement (16.1) fait pivoter l'élément cintré (2) par rapport au bâti d'unité de basculement (5) dans la première (TD.1) des directions opposées (TD.1, TD.2) et le second actionneur de basculement (16.2) est dans un mode de stationnement
- soit le second actionneur de basculement (16.2) fait pivoter l'élément cintré (2) par rapport au bâti d'unité de basculement (5) dans la seconde (TD.2) des directions opposées (TD.1, TD.2) et le premier actionneur de basculement (16.1) est en mode de stationnement.

20. Procédé d'emballage selon la revendication 18,
**caractérisé en ce que**
l'ensemble d'actionneur de basculement (16.1, 16.2) comprend :
- un premier actionneur de basculement avec une partie de base (18.1, 18.2) reposant sur le bâti d'unité de basculement (5) et
- un dispositif de translation d'actionneur et
l'élément cintré (2) s'étend suivant un axe central parallèle à la direction de déplacement d'objet (OMD),
dans lequel l'étape dans laquelle l'ensemble d'actionneur de basculement (16.1, 16.2) fait pivoter de manière sélective l'élément cintré (2) dans l'une des directions opposées (TD.1, TD.2) comprend les étapes dans lesquelles :
- soit le dispositif de translation d'actionneur déplace la partie de base (18.1, 18.2) de l'actionneur de basculement dans une première position de décalage dans laquelle la partie de base présente un décalage latéral par rapport à l'axe central dans une première direction de décalage et l'actionneur de basculement étant dans la première position de décalage fait pivoter l'élément cintré (2) par rapport au bâti d'unité de basculement (5) dans une première (TD.1) des deux directions opposées (TD.1, TD.2)
- soit le dispositif de translation d'actionneur déplace la partie de base (18.1, 18.2) du dispositif à piston et cylindre dans une seconde position de décalage dans laquelle la partie de base présente un décalage latéral par rapport à l'axe central dans une seconde direction de décalage qui est opposée à la première direction de décalage et
l'actionneur de basculement étant dans la seconde position de décalage fait pivoter l'élément cintré (2) par rapport au bâti d'unité de basculement (5) dans la seconde (TD.2) des deux directions opposées (TD.1, TD.2).

21. Procédé d'emballage selon l'une des revendications 18 à 20,
**caractérisé en ce que**
l'étape dans laquelle l'ensemble d'actionneur de basculement (16.1, 16.2) fait pivoter de manière sélective l'élément cintré (2) dans une des directions opposées (TD.1, TD.2) comprend les étapes dans lesquelles :
- un capteur d'inclination mesure l'inclinaison du dispositif d'emballage autour d'un axe parallèle à la direction de déplacement d'objet (OMD),
- l'ensemble d'actionneur de basculement (16.1, 16.2) fait pivoter l'élément cintré (2) dans la première (TD.1) des deux directions opposées (TD.1, TD.2) si le sol sur lequel le dispositif d'emballage est utilisé monte suivant la première direction, et
- l'ensemble d'actionneur de basculement (16.1, 16.2) fait pivoter l'élément cintré (2) dans la seconde (TD.2) des deux directions opposées (TD.1, TD.2) si le sol monte suivant la seconde direction.
